# EUROPEAN PATENT APPLICATION

(11) **EP 4 764 953 A1**
(43) Date of publication of application: **24.06.2026**
(21) Application number: 25211580.3
(22) Date of filing: 28.10.2025
(51) Int. Cl.: G06N 3/0495, G06F 1/329, G06F 8/41, G06N 3/063

(54) **REDUCING POWER CONSUMPTION OF NEURAL NETWORK ACCELERATOR THROUGH WEIGHT REORDERING**

(30) Priority: 23.12.2024 US 202463738314 P; 17.09.2025 US 202519331254
(71) Applicant: Intel Corporation, Santa Clara, CA 95054 (US)
(72) Inventor: KUNDU, Shamik, San Jose, 95136 (US); DAS, Arghadip, West Lafayette, 47906 (US); RAHA, Arnab, San Jose, 95136 (US); GHOSH, Soumendu Kumar, Hillsboro, 97124 (US); MATHAIKUTTY, Deepak Abraham, Chandler, 85224 (US)
(74) Representative: HGF

(57) **Abstract**

To address the switching issue directly, an improved compiler can be implemented to prepare a DNN for hardware execution on a DNN accelerator in a way that considers switching activity during multiply accumulate (MAC) operations and reorders the weights to reduce the switching activity. The resulting compiled DNN can reduce energy consumption through reducing or minimizing switching activity in the DNN and can effectively reduce dynamic power consumption in DNN accelerators. The compiler can determine and enforce an improved weight ordering during the model compilation process. The compiler can be guided by one or more weight arrangement and reordering rules to ensure weights are ordered to minimize or reduce switching activity as much as possible without changing the output accuracy of the model or violating strict data paths of the MAC array. Compiled models with weight reordering would exhibit remarkably lower dynamic power consumption when deployed on DNN accelerators.

## Description

### Cross-reference to Related Application(s)

This application claims priority to and/or receives benefit from U.S. Provisional Application No. 63/738,314, filed on 23 December 2024 and titled "REDUCING POWER CONSUMPTION OF NEURAL NETWORK ACCELERATOR THROUGH WEIGHT REORDERING". The U.S. Provisional Application is hereby incorporated by reference in its entirety.

### Background

Deep neural networks (DNNs) are used extensively for a variety of artificial intelligence (AI) and machine learning (ML) applications ranging from computer vision to speech recognition and natural language processing due to their ability to achieve high accuracy. However, the high accuracy comes at the expense of significant computation cost. DNNs have extremely high computing demands as there can be a large number of operations as well as a large amount of data to read and write.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates switching activity in a processing cell and its impact on switching power consumption, according to some embodiments of the disclosure.
FIG. 2 illustrates switching activity without weight reordering, according to some embodiments of the disclosure.
FIG. 3 illustrates theoretical minimum switching activity with optimal weight reordering, according to some embodiments of the disclosure.
FIG. 4 illustrates reducing switching activity with weight reordering by applying a pivot-based greedy heuristic sorting algorithm, according to some embodiments of the disclosure.
FIG. 5 illustrates the pivot-based greedy heuristic weight reordering algorithm, according to some embodiments of the disclosure.
FIG. 6 illustrates a model compilation process having weight reordering to reduce switching power consumption, according to some embodiments of the disclosure.
FIG. 7 illustrates correct weight loading order over time, according to some embodiments of the disclosure.
FIG. 8 illustrates incorrect weight loading order over time, according to some embodiments of the disclosure.
FIG. 9 illustrates maintaining weight ordering within each round but changing weight ordering in consecutive rounds, according to some embodiments of the disclosure.
FIG. 10 illustrates sample layer computation and a hardware model, according to some embodiments of the disclosure.
FIG. 11 illustrates unchanged computation performed in layer 1 and layer 2, according to some embodiments of the disclosure.
FIG. 12 illustrates reordering both input channel order and output channel order for layer 1 and leaving input channel order and output channel order unchanged for layer 2, according to some embodiments of the disclosure.
FIG. 13 illustrates reordering input channel order for layer 1 and reordering input channel order for layer 2, according to some embodiments of the disclosure.
FIG. 14 depicts an optimal layer selection algorithm, according to some embodiments of the disclosure.
FIG. 15 depicts layer-wise weight reordering process, according to some embodiments of the disclosure.
FIG. 16 illustrates a DNN system, according to some embodiments of the disclosure.
FIG. 17 illustrates a processing engine, according to some embodiments of the disclosure.
FIG. 18 illustrates a sparse processing cell, according to some embodiments of the disclosure.
FIG. 19 illustrates sparse computation in the sparse processing cell, according to some embodiments of the disclosure.
FIG. 20 illustrates a DNN module, according to some embodiments of the disclosure.
FIG. 21 illustrates a compiler, according to some embodiments of the disclosure.
FIG. 22 depicts a flow diagram illustrating a method that can be carried out by a compiler, according to some embodiments of the disclosure.
FIG. 23 is a block diagram of an exemplary computing device, according to some embodiments of the disclosure.

### Detailed Description

### Overview

DNNs are widely used in the domains of computer vision, speech recognition, image, and video processing mainly due to their ability to achieve beyond human-level accuracy. A DNN typically includes a sequence of layers. A DNN layer may include one or more deep learning operations (also referred to as "neural network operations"), such as con-volution, matrix multiplication, layer normalization, batch normalization, SoftMax operation, pooling, elementwise operation, linear operation, nonlinear operation, activation function, and so on.

DNN models may be executed, e.g., for training or inference, by neural network accelerators or neural network hardware accelerators implementing circuits that are designed to accelerate execution of neural network operations. Neural network accelerators can be referred to as neural processing units (NPUs), DNN accelerators, AI accelerators, etc. In some architectures, a DNN accelerator may be or include one or more data processing units (DPUs). A DPU may also be referred to as a compute block or compute tile. A DPU may include a processing engine (PE) that can carry out data-parallel neural network operations. A PE may include one or more multiply-and-accumulate (MAC) arrays. A MAC array can include an array of MAC processing elements. A DPU may also include a post-processing engine (PPE). The MAC array is often used to perform parallel multiplications of input activations and weights for matrix multiplication and convolution operations of a DNN.

As DNNs continue to grow in complexity and application scope, they have become useful to a wide range of industries, including autonomous vehicles, medical diagnostics, advanced robotics, and so on. These models often utilize massive computational resources, particularly for the MAC operations that dominate neural network inference and training. The challenge can be exacerbated by the need for real-time or near-real-time processing on power-constrained devices, such as smartphones, drones, and Internet-of-Things (IoT) sensors.

Optimizing performance per watt in these environments can be paramount, yet a significant inefficiency remains unaddressed: dynamic power consumption driven by switching activity in the MAC units. Weight switching activity can account for approximately a large portion of the total power consumed by NPUs, which is a substantial proportion of the power budget. This dynamic power usually arises from bit transitions in weights and activations during MAC operations performed by the MAC arrays, with each transition generating toggles in the underlying digital logic and incurring power costs. For large-scale accelerators executing thousands of operations in parallel, this cumulative switching activity can lead to dynamic power consumption that contributes up to most of the total power dissipation. Such inefficiency can present a critical barrier to deploying DNNs in edge devices, where reducing power consumption is as vital as preserving computational efficiency and accuracy.

Despite advances in pruning, quantization, and custom hardware techniques like clock-gating and power-gating, such solutions fail to address switching activity directly. Pruning can decrease the number of MAC operations, and quantization can reduce bit-width, but neither can optimize transitions between consecutive weights. Consequently, even aggressively pruned or quantized networks would exhibit high switching-induced power losses. Hardware techniques reduce power by disabling unused MAC units but leave active switching events unaddressed, yielding incremental improvements at best.

To address the switching issue directly, an improved compiler can be implemented to prepare a DNN for hardware execution on a DNN accelerator in a way that considers switching activity and reorders the weights to reduce the switching activity. The resulting compiled DNN can reduce energy consumption through reducing or minimizing switching activity in the DNN and can effectively reduce dynamic power consumption in DNN accelerators. The compiler can determine and enforce an improved weight ordering during the model compilation process. The compiler can be guided by one or more weight arrangement and reordering rules to ensure weights are ordered to minimize or reduce switching activity as much as possible without changing the output accuracy of the model or violating strict data paths of the MAC array. A weight ordering optimized model may have systematically ordered weights according to these rules. Compiled models with weight reordering would exhibit remarkably lower dynamic power consumption when deployed on DNN accelerators. The power savings can result from the reduced switching activity in MAC units, which can be monitored through power profiling tools during runtime.

The compiler receives a definition of the neural network model, which can include multiple layers of neural network operations. A layer can have parameters, also referred to as weights, that are used by the neural network model to make predictions. These weights can be organized as weight tensors, and weight tensors can be applied to input activations using the MAC array of the DNN accelerator to produce output activations of the layer. The compiler analyzes the neural network model and the weights being applied to input activations in the layers. In particular, the compiler determines how weights are fed to the MAC array of MAC processing elements of the DNN accelerator. The compiler can access a switching activity metric, which measures how frequently the binary bits in these weights change as they are fed to the MAC array. Frequent bit changes, referred as "switching activity," increase power consumption.

To conserve energy, the compiler determines an ordering for these weights, arranging them so that the switching activity metric, e.g., a measurement that quantifies the number of bit changes during processing, is reduced. This weight rearrangement reduces switching activity and lowers the amount of dynamic power consumed. The compiler generates machine-readable instructions that configure the DNN accelerator hardware to use these newly ordered weights or feed the weights according to the determined ordering. The compiler can generate machine-readable instructions that configure the DNN accelerator hardware to load the weights according to the determined ordering onto the MAC array and apply the weights to the input activations in the MAC array. Reordering of weights at the compiler means the DNN accelerator hardware can perform the MAC operations to apply the weights just as accurately as before, but with significantly improved energy efficiency. The compiler solution enables DNN accelerators to run more efficiently by reducing unnecessary power use through weight arrangement that reduces switching activity, without altering the underlying hardware or compromising the accuracy of neural network models. This approach to addressing dynamic power consumption is particularly valuable for devices with limited battery or power resources, such as smartphones and sensors, allowing them to run sophisticated neural network models faster and more sustainably.

One way to quantify the switching activity metric is through measuring switching activity between a pair of weights, where one weight of the pair of weights can be fed as input to a processing element and the other weight of the pair of weights can be fed as the input to the processing element at a subsequent time. Phrased differently, the input switches from one weight of the pair of weights to the other weight in the pair of weights. The switching activity metric of a pair of weights can be a Hamming distance. Specifically, Hamming distance is defined as the number of positions at which the corresponding symbols (bits, in the case of binary data) are different. In other words, the Hamming distance quantifies the number of bit flips needed to change one binary string into another.

In some embodiments, the compiler can employ a weight reordering technique that can strategically reduce or minimize the switching activity metric (e.g., Hamming distances between consecutive weight transitions). By reordering weights based on the switching activity metric, the compiled DNN model can result in significant cuts in dynamic power consumption.

In some embodiments, a streamlined and more efficient reordering algorithm can be implemented to more efficiently achieve reordering without extremely high computational complexity. The algorithm can be referred to as a pivot-based greedy heuristic sorting algorithm. The algorithm can iteratively select a current pivot and update the ordering based on the switching activity to the current pivot. In an iteration of the algorithm, the compiler can select a weight in the plurality of weights to be a current pivot. The compiler can select a next weight in the ordering of the plurality of weights having a minimum switching activity metric to the current pivot. The compiler can then update the current pivot to be the next weight.

The MAC array of the DNN accelerator can have a stencil or specific hardware arrangement or structure. A MAC array can have P number of MAC processing elements. For example, P=16 means there can be 16 parallel weight-processing paths per round (P can represent a number of MAC processing elements per row). A MAC processing element of the MAC array can have M number of MAC units and execute M parallel MAC operations per cycle. Per round, the MAC array can process R number of input channels (ICs) or C values (R can represent a number of C values per round). For example, R=16 means there can be 16 C values distributed across the 16 MAC processing elements in each round. A C block, or an input channel block, refers to a group of ICs processed together within a round, reflecting the structured C dimension in the weights. A K block, or an output channel block, refers to a group of output channels (OCs) representing a segment of filters being processed together along a K dimension.

The hardware arrangement of the MAC array can dictate the way the MAC operations are performed, how ICs and weights are loaded onto the MAC array (e.g., in rounds), and how OCs are produced. In particular, the MAC array is architected around highly structured dataflows that prioritize throughput and synchronization. For example, the MAC array follows a rigid dataflow because of the hardware arrangement, where weights and activations are streamed into MAC processing elements via fixed data paths that rely on predictable loading patterns. These data paths, implemented using adder trees and accumulators in the MAC processing elements, follow a strict and uniform order of incoming weights, along the C dimension (the channel dimension). When reordering weights within a layer, the data paths are taken into account. One constraint is the fixed intra-round order of C indices across MAC processing elements for a given output channel K. During each round of computation, weights from a fixed set of C values are distributed across MAC processing elements in a predetermined order. Another constraint is the order uniformity across Ks and rounds. Once a particular C ordering is established in a round, the same sequence is to be repeated for Ks processed in that round as well as for future rounds of computation. This ensures simplified control and consistent timing across MAC processing elements and eliminates the possibility of adapting the ordering dynamically based on switching cost within a layer.

Moreover, inter-layer dependencies between the output channels (K) of one layer and the input channels C of the next layer introduce structural constraints that impact where and how weight reordering can be applied. When reordering weights across layers, the constraints are taken into account, accounting for how weights, activations, and output channels are interconnected between layers. In a convolutional layer, activations (ACT) are multiplied with weights (WFT) to produce output channels (K). The output channels K are then consumed as the input channels (C) for the following layer. Thus, reordering of K in layer i is carried through as the C order of layer i+1 to preserve functional correctness.

The circuits in the MAC array of the DNN hardware accelerator and the mathematical operations being performed by the MAC array present constraints for how the weights can be ordered. In some scenarios, it is not possible to reorder weights for the layers of the DNN model. To optimally identify layers for weight reordering, a layer selection algorithm can be implemented to determine one or more layers to apply the weight reordering mechanism. The layer selection algorithm can select non-consecutive layers that can result in the most aggregate switching reduction potential. In some embodiments, the compiler can select a subset of layers in the plurality of layers based on one or more of a switching activity score for each layer and a number of weights for each layer. In some embodiments, the compiler can select a subset of layers in the plurality of layers based on a switching cost for each layer under a constraint that only non-consecutive layers are selected. In some embodiments, the compiler can select a subset of layers in the plurality of layers by iteratively comparing a cumulative switching cost if a current layer is skipped and a further cumulative switching cost if the current layer is selected. The compiler can effectively achieve an optimal amount of power consumption reduction within the accelerator specific hardware constraints. By analyzing switching activity and weight distribution across layers, the compiler may select a subset of layers that maximize efficiency while adhering to hardware limitations. This approach can enhance energy savings and performance gains in DNN accelerators without requiring hardware modification, making them scalable and adaptable to diverse AI workloads.

Once a layer of the DNN model is selected for weight reordering, a two-level sorting mechanism is implemented to reduce switching within the layer in a way that honors the hardware-imposed constraints. In particular, a level-0 sorting mechanism reduces switching within K blocks (intra K block switching), and a level-1 sorting mechanism reduces switching between K blocks (inter K block switching). A K block has R rows that correspond to different input channels (C) of a layer.

For level 0 sorting, the compiler selects a pivot K block that exhibits the highest switching activity. Starting with a first input channel block (a first C block) having R input channels, the compiler determines the ordering of the plurality of weights that reduces switching activity between R rows of the plurality of weights corresponding to a plurality of input channels of the layer. The compiler determines a C ordering of the R rows of weights of the pivot K block that minimizes or reduces the switching activity metric. The C ordering can reduce intra K block switching caused by bit transitions among the input channels (C) during the MAC operations. Since weights are structured in MxP groups with C values processed in lock step, the C ordering is maintained across the grouping and enforces the C ordering across K blocks in the first C block. This process can be repeated individually for further C blocks of the layer to determine a unique C ordering for each C block that can lead to the most reduction in switching.

For level 1 sorting, the compiler selects a pivot C block that exhibits the highest switching activity. The compiler determines a K ordering that minimizes or reduces switching activity between K blocks, e.g., a last row of rows of a K block and a first row of rows of a further K block. Phrased differently, the compiler determines a K ordering that minimizes or reduces switching activity of input channels across consecutive block assesses. The compiler determines the ordering of the plurality of weights that reduces switching activity between a last row of rows of the plurality of weights (a last row of rows of weights of a K block) and a first row of further rows of a plurality of further weights of the layer (a first/beginning row of rows of weights of a further K block). The rows of weights of a K block correspond to a plurality of input channels of the layer. The further rows of weights of K block correspond to a plurality of further input channels of the layer. The K ordering is enforced uniformly across the C blocks of the layers.

In some embodiments, the plurality of weights being reordered are quantized. When weight reordering is applied after low bit precision quantization, the dynamic power consumption can be further reduced by exploiting the benefit of lower entropy and compression of the weight dynamic range.

In some embodiments, the weight reordering approach can cut dynamic power consumption significantly, as measured in some prototype NPU implementations. This reduction can directly address the total NPU power previously dominated by weight switching activity, marking a transformative shift in energy-efficient hardware design. Moreover, the approach can achieve this reduction without requiring architectural modifications, ensuring compatibility with existing hardware ecosystems and facilitating seamless integration. Unlike other approaches, this weight reordering approach can preserve model accuracy while improving energy efficiency, enabling significant increases in tera operations per second per watt (TOPS/W). The weight reordering approach can unlock the next generation of energy-efficient AI hardware for power-constrained applications, such as smartphones, IoT sensors, and autonomous systems. By focusing on switching activity, a currently overlooked contributor to dynamic power, the weight reordering approach can deliver tangible, quantifiable benefits, addressing a critical gap in the current state of DNN accelerator optimization.

The weight reordering mechanism can minimize dynamic power consumption in DNN accelerators by strategically reducing the Hamming distance between consecutive weight transitions. By optimizing weight arrangement to lower bit-switching activity during MAC operations, the algorithm can directly enhance the TOPS/W performance metric, resulting in unprecedented levels of accelerator-level energy efficiency. The weight reordering approach can address switching inefficiencies at their root, making the approach an ideal solution for power-constrained environments like mobile and edge devices.

One of core strengths is the approach's ability to significantly reduce power consumption through an algorithmic solution in the compiler, eliminating the need for costly architectural changes or specialized hardware. Unlike other methods that rely on hardware-level optimizations like clock-gating or power-gating, the weight reordering approach can operate at the compiler-level, enabling seamless integration into DNN accelerators without time-consuming hardware redesigns.

While the weight reordering algorithm is architecture-agnostic and compatible with a wide range of DNN accelerators, the algorithm's benefits can be particularly amplified in accelerators using output stationary dataflow. This widely adopted dataflow can enhance the algorithm's weight reordering capabilities, further reducing switching activity and maximizing efficiency in power-constrained AI applications.

While many power optimization techniques can lead to degraded model performance or accuracy loss, the weight reordering approach can preserve the accuracy of DNN models by ensuring that weight reordering does not compromise the integrity and accuracy of the underlying computations. The heuristic sorting algorithm can optimally reorder weights in a way that reduces power without impacting the network's ability to perform high-precision tasks. This can enable developers to achieve both power efficiency and model accuracy, a balance that is difficult to attain with other solutions.

The weight reordering approach can achieve significant reductions in switching activity and translates the reduction directly into dynamic power savings across various DNN models, e.g., models quantized to 8-bit integer (INT8) precision. In an example for MobileNetV3-large, the weight reordering approach can reduce switching activity by up to half in middle and deeper layers, where fewer input channels allow greater reordering flexibility, resulting in remarkable reduction in dynamic power consumption at the accelerator-level. In an example for ResNet50, the reduction in switching activity is predominantly in the later layers and achieves significant power savings at the accelerator-level. In an example for Inception-V3 and GoogleNet, the approach can achieve consistent switching activity reductions across layers, with dynamic power savings across the entire model. These improvements can be achieved with zero reduction in application-level model accuracy and without introducing additional hardware overhead in the accelerator architecture.

Embodiments of the present disclosure may improve on at least some of the challenges and issues described above by providing weight reordering for a subset of layers in a DNN model. By directly minimizing bit transitions through a strategic weight reordering technique, weight reordering can address the root cause of dynamic power inefficiencies in MAC operations. In various embodiments, the weight reordering technique minimizes dynamic power consumption in DNN accelerators by reducing switching activity. By strategically rearranging weights to minimize the switching activity metric, e.g., Hamming distance, between consecutive operations, the compiler-based optimization can significantly reduce bit transitions in MAC units. Unlike other techniques, the approaches in this disclosure can optimize power consumption without needing any hardware modifications or sacrificing the accuracy of the model, making it both scalable and highly efficient. This approach can achieve substantial power savings without requiring hardware modifications or causing any changes in model accuracy, making it both energy-efficient and scalable across diverse hardware platforms.

TOPS/W may be used as a critical energy efficiency metric for client and edge computing platforms. The compiler-level weight reordering algorithm significantly enhances the power efficiency of DNN accelerators by reducing switching power at both the processing cell (e.g., the sparse processing cell) and at the level of the data processing unit, enabling high performance with reduced area and energy costs. This improvement can directly support efficient edge inference for a wide range of DNN applications, including imaging, video, and speech processing. Implementing weight reordering can enable deploying DNN models onto high performance NPUs with a lower silicon footprint with significantly reduced energy consumption.

### Tensors

Input or output data of deep learning operations may be arranged in data structures called tensors. A tensor is a data structure having multiple elements across one or more dimensions. Examples of tensors include vector (which is one-dimensional (1D) tensor), matrix (which is two-dimensional (2D) tensor), three-dimensional (3D) tensors, four-dimensional (4D) tensors, and even higher-dimensional tensors. A dimension of a tensor may correspond to an axis, e.g., an axis in a coordinate system. A dimension may be measured by the number of data points along the axis. The dimensions of a tensor may define the shape of the tensor. A DNN layer may receive one or more input tensors and compute an output tensor from the one or more input tensors. Taking a convolutional layer for example, the input tensors include an activation tensor (also referred to as "input feature map (IFM)" or "input activation tensor") including one or more activations (also referred to as "input elements") and a weight tensor. The weight tensor may be a kernel (a 2D weight tensor), a filter (a 3D weight tensor), or a group of filters (a 4D weight tensor). A convolution may be performed on the input activation tensor and weight tensor to compute an output activation tensor in the convolutional layer.

Tensors in DNNs can be saved in X-major (e.g., XYZ or XZY format), Y-major formats (e.g., YXZ or YZX format), or Z-major formats (e.g., ZXY or ZYX format). The format of a tensor may define the order in which the data points in the tensor are stored, written, or read. The first character may represent the dimension in which data points are contiguous in memory. The second character may represent the dimension in which data points can be accessed after the contiguous data points are accessed in memory. The third character may represent the dimension in which data points are accessed after the data points in the dimension represented by the second character are exhausted. Taking the ZXY format for example, the access order first starts in the Z dimension, then moves to the X dimension, and finally moves to the Y dimension. Data points in the tensor are contiguous in memory in the Z dimension, meaning data points having the same (x, y) coordinates are contiguous in memory. Using tensor permutation, the tensor may be read from memory in a different format.

### Focusing on cause of dynamic power consumption: switching activity

The deployment of DNNs across applications such as machine learning, autonomous systems, and natural language processing has driven significant advancements in DNN architectures. However, as DNN architectures grow in complexity, their computational demands increase substantially, which creates challenges, particularly in power-constrained environments like edge devices.

One issue in DNN accelerators is the high dynamic power consumption caused primarily by switching activity during MAC operations. Switching activity includes the transitions between binary states within hardware circuits during computations, and the frequent toggling of bits directly results in power loss. This problem can be even more pronounced in output stationary architectures. In such architectures, weights are repeatedly accessed and fed into the MAC units, further intensifying the switching activity. The frequent fetching and application of weights can cause a higher number of bit transitions, making the issue of dynamic power consumption even worse. Each new weight can introduce new binary transitions within the circuitry, leading to increased power loss during each computation cycle.

While various techniques such as pruning, quantization, and clock-gating have been proposed to mitigate power consumption in DNNs, they fail to specifically address the root cause of power inefficiency: switching activity at the weight level. These methods either reduce the number of active computations or introduce additional hardware complexity, but they fail to minimize the random and frequent switching of bits during MAC operations. In scenarios where weights need to be frequently reloaded, such as in output stationary designs, these solutions fall short of delivering substantial power savings.

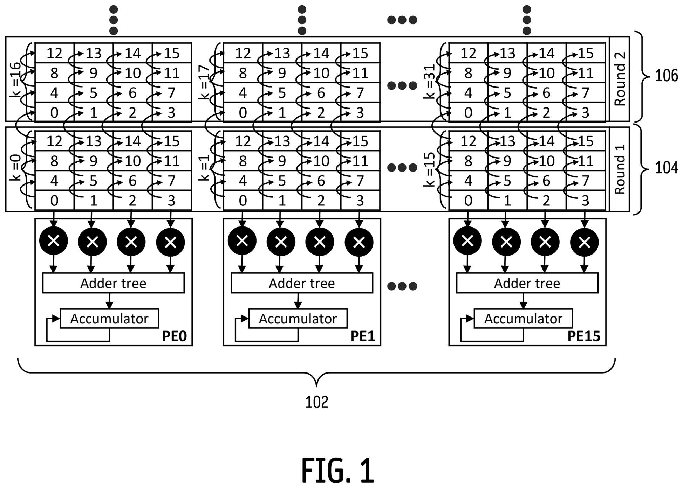

FIG. 1 illustrates switching activity in a processing cell and its impact on switching power consumption, according to some embodiments of the disclosure. Specifically, FIG. 1 illustrates an exemplary data path in the MAC array having P=16 MAC processing elements 102 (e.g., PE0, PE1, ..., and PE15) per row. A MAC processing element of MAC processing elements 102 in the illustration can execute M=4 parallel MAC operations per cycle using M=4 parallel MAC processing units. Each MAC processing element having M parallel processing units operate on input channels (C) and kernel (K) dimensions simultaneously. The data path may have an M-P-R configuration where there are M MAC processing units per MAC processing element, P Processing elements per row, and R input channels per round. The M-P-R configuration enables high throughput but can introduce fine-grained switching activity during weight loading.

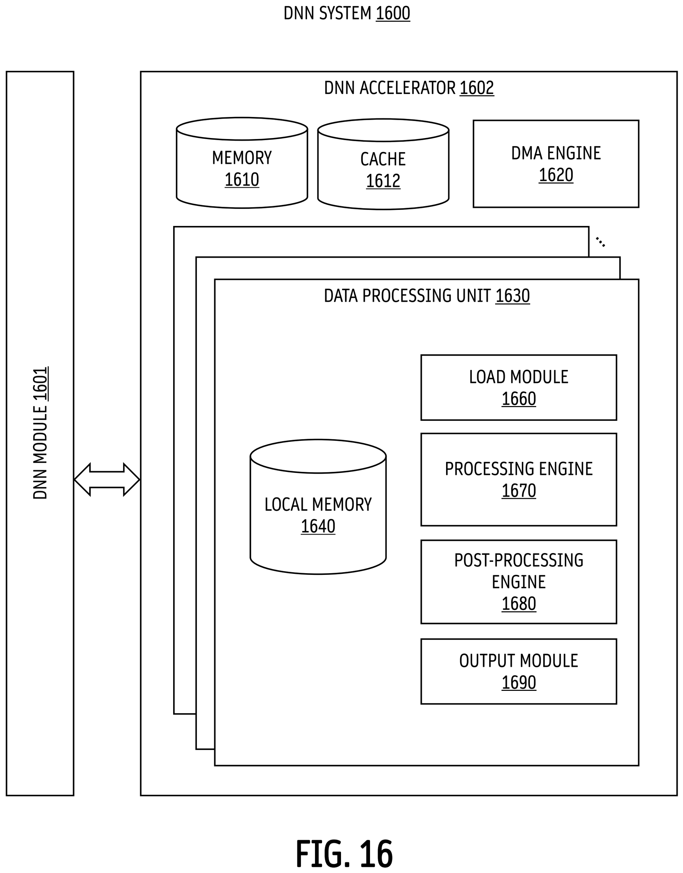

As detailed later in FIGS. 16-19, a data processing unit of a DNN accelerator can include a processing engine. A processing engine may include a grid of processing cells, such as sparse processing cells. Each processing cell can have an array of MAC processing elements, or a MAC array, that perform MAC operations. FIG. 1 depicts MAC processing elements 102 as part of a MAC array of a processing cell. The processing engine may be complemented by a post-processing engine to process the processing engine's output. The data processing unit may also have a local memory (e.g., a static random-access memory (SRAM)) to store and load activations and weights for each DNN layer, a load module to load data onto the processing engine, and an output module that drains data from the post-processing engine. The processing engine may include a controller that may orchestrate the loading, computation, partial sum accumulation, and extraction of the output activations from the processing engine. In DNNs, MAC operations may be used to compute the dot product of many weights and hidden-layer activations to produce the output feature maps for the next layer. A MAC processing element in a processing cell can perform one or more MAC operations using a local data path. The local data path can include input activation register files, weight activation files, multipliers, and accumulators.

While the processing engine can perform many parallel MAC computations, they incur power loss due to high switching activity, as weights that are routed to various MAC processing elements, such as MAC processing elements 102, switch from one computation cycle to another. The cyclical nature of fetching and applying new weights at the inputs of MAC processing elements 102, as illustrated in FIG. 1, can result in substantial bit transitions, intensifying the power demands in each computation cycle. The breakdown of power consumption highlights that switching power constitutes a significant portion of the processing engine power consumption, which itself is also a significant part of the entire DNN accelerator power consumption. This breakdown can underscore how switching activity directly contributes to overall power inefficiency. The "switching of weights" highlighted by arrows indicates that weights are constantly being loaded and switched at the inputs of the MAC processing elements, creating many binary transitions in the computation rounds. Bit-level transitions during weight loading can occur both within and across rounds, depending on the C and K mapping. This repetitive switching process, especially with random and dynamic weight values, leads to a marked increase in power dissipation.

In an exemplary output stationary dataflow, the weights are distributed across MAC processing element columns by output channel K, and input channels C stream along rows of MAC processing element of MAC processing elements 102. The convolution's spatial dimensions (Fx, Fy) are unrolled temporally, with optional double-buffered register files hiding memory latency across rounds. In some output stationary patterns, the inner-most loop maintains output stationarity, i.e., the partial sums (Psums) remain local to register files or accumulators during accumulation. Outer loops (e.g., over Fx, Fy, or K) may still follow input or weight stationary styles if appropriate local buffers exist. Innermost-loop output stationarity improves energy efficiency by avoiding costly local memory to register files transfers and supporting high-bit-width accumulation (e.g., 32-bit integer (INT32) for INT8 MAC operations) in-place. Since final outputs are written back at lower precision (e.g., INT8), deferring local memory writes reduces both data volume and precision-related bandwidth overhead.

In such configurations such as the one illustrated in FIG. 1, where each MAC processing element maintains its own weight register file, the register file content can be updated with new weights every computation round, as seen between round 1 104 and round 2 106. Due to the distribution of different filters across columns and limited weight reuse in high-R and high-P settings, the sequence of weights loaded into a MAC processing element of MAC processing elements 102 can exhibit large bitwise differences between consecutive values (as illustrated by the arrows in FIG. 1) within rounds and between rounds. This results in frequent bit toggles, elevating switching activity within the MAC data path. Such irregular switching patterns can significantly increase dynamic power consumption, especially when weights are drawn from diverse output channels without spatial or value locality.

Some methods like pruning, quantization, and clock-gating, though valuable in reducing the number of computations or adding control over clock cycles, do not address the core issue of bit-level switching. While these techniques can manage overall computational load, they overlook the fundamental cause of inefficiency, i.e., frequent and random switching at the weight level. The amount of switching can be especially high in output stationary architectures like the one shown in the diagram. The power consumption caused by switching can be particularly problematic in designs where weights are to be continually loaded, resulting in additional binary transitions that significantly elevate power consumption. In output stationary architectures, where weights are repeatedly accessed for every computation, each new weight being loaded can introduce new binary transitions within the circuitry. These transitions are not only frequent but also random, depending on the dynamically changing weights, leading to substantial power dissipation across computation cycles. Each time weights are loaded, the random switching of bits within MAC units can add to power consumption, creating inefficiency that is hard to control with conventional methods. As such, while pruning, quantization, and clock-gating are useful for managing the number of active computations, they can fall short of addressing the root cause of inefficiency in these architectures-frequent and random switching at the weight level. In output stationary architectures, where weights are continually loaded to perform computations, the power savings offered by other methods can be limited, as they do not tackle the root problem of excessive bit transitions. Thus, despite attempts to reduce computational load through these methods, the fundamental challenge remains unaddressed by the other methods. This limitation significantly diminishes the effectiveness of other techniques, as they fail to deliver substantial power savings in scenarios that involve repeated weight accesses, e.g., a characteristic inherent to output stationary designs, such as the one depicted in FIG. 1.

In one scenario examining ResNet-50, switching profile characteristics at the MAC processing element level for the first three layers under a representative M-P-R configuration (M=4, P=16, R=32) exhibits variation across layers and over time. Certain layers, such as layer1.0.conv3, show consistently high switching activity, reflecting poor weight locality. These transitions can account for a significant portion of total chip power and may dominate the energy profile under full MAC utilization. Unlike static power or computation intensity, switching activity is heavily influenced by how weights are arranged in memory and streamed into compute units. Yet current accelerators lack the flexibility to reorder weights at runtime, and existing software optimizations do not target this granularity.

In various embodiments of this disclosure, a solution to this problem involves a weight reordering technique that reduces bit transitions during MAC operations. By strategically rearranging weights to minimize switching activity, the compiled model can achieve significant power savings without needing hardware modifications or risk accuracy degradation, making it scalable and effective across various DNN accelerators.

### Hamming distance as a switching activity metric

To reduce dynamic power consumption, a heuristic weight reordering algorithm can be implemented to find a weight ordering that can reduce the switching activity in executing the MAC operations. The heuristic weight ordering technique can include a compiler-level reordering solution that minimizes switching activity between consecutive weights in MAC data paths (e.g., such as the data paths illustrated in FIG. 1), through using Hamming distances between consecutive weights in MAC data paths as a heuristic.

Switching activity, driven by bit transitions, is a major source of dynamic power consumption in circuits, particularly in DNN accelerators where a large number of MAC operations occur in parallel and in DNN accelerators implementing the output stationary data flow as illustrated in FIG. 1. The heuristic being used in the algorithm can be a switching activity metric, such as a Hamming distance between consecutive weight values. By minimizing the Hamming distance between consecutive weight values, the weight reordering algorithm can find or determine an ordering or arrangement of weights to ensure that successive MAC operations induce fewer bit transitions, leading to a substantial reduction in dynamic power consumption, while preserving the accuracy of the neural network.

Hamming distance may serve as the primary metric for this optimization, representing the number of bit differences between two binary numbers. In this context, the Hamming distance between two weight values is directly correlated with the number of bit transitions during computation. The larger the Hamming distance, the more switching occurs, resulting in higher power consumption. Therefore, the Hamming distance can serve as an effective heuristic, metric, or measurement for switching activity. In many cases, switching activity is directly proportional to the Hamming distance between consecutive weights. By minimizing the cumulative Hamming distance across a sequence of weight values, the weight reordering algorithm can reduce the overall switching activity and the associated power costs.

Given two binary strings of equal length, A and B, the Hamming distance d(A,B) can be calculated as follows:

| | |
|---|---|
| For each position i in the strings, compare the bit at position i in a with the bit at position i in b. If the bits are different, increment the distance by 1. The sum over the positions gives the Hamming distance. | |
| For example: | |
| | String A: 1011101 |
| | String B: 1001001 |
| The Hamming distance d(A,B) is 2, as the bits differ at two positions. | |

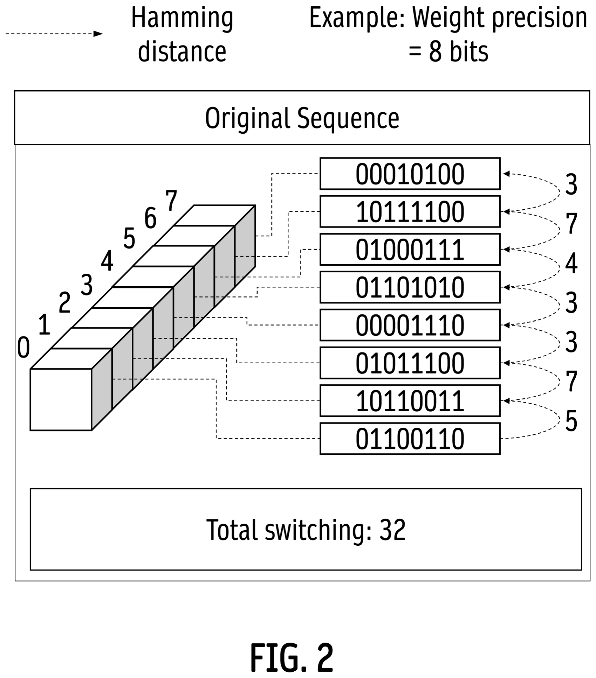

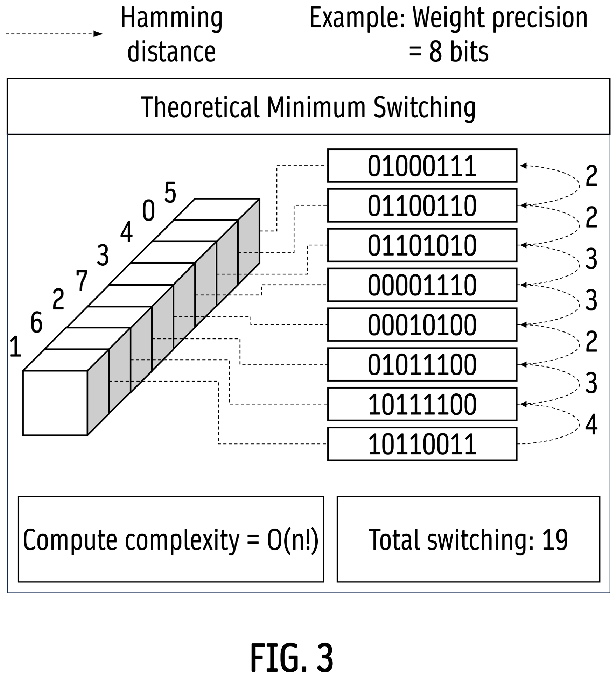

FIGS. 2-3 illustrate the motivation behind leveraging Hamming distance to minimize switching activity, in accordance with various embodiments. FIG. 2 illustrates switching activity without weight reordering, according to some embodiments of the disclosure. FIG. 3 illustrates theoretical minimum switching activity with optimal weight reordering, according to some embodiments of the disclosure.

In the original sequence of weights, as illustrated in FIG. 2, the weights are arranged in a default (original or naïve) order that leads to significant switching activity. This default order can result in a high total switching count, such as 32 bit transitions across the sequence (e.g., total switching=32), due to the large Hamming distances between successive weight pairs. In theory, an optimal reordering could minimize the total switching activity (e.g., total switching=19) by ensuring that each consecutive weight pair has the smallest possible Hamming distance, as demonstrated in FIG. 3. However, achieving this theoretical minimum requires a computational complexity of *O*(*n*!), which can be impractical for real-world applications due to the factorial increase in complexity as the number of weights grows.

### Efficient weight reordering based on a switching activity metric

To address this challenge, a more computationally feasible or practical heuristic algorithm can be implemented. The heuristic approach may approximate the optimal solution as seen in FIG. 3 by reducing switching activity while maintaining a much lower computational cost. The algorithm is referred to herein as a pivot-based greedy heuristic sorting algorithm, which has a computational complexity of *O*(*n*²).

The sorting algorithm may begin by selecting an initial pivot weight from the sequence of weights. The initial pivot weight can be selected at random. The initial pivot weight can be selected at a predetermined position of the sequence of weights. In each iteration, the algorithm may select or determine the weight in the sequence of weights that has the smallest Hamming distance from the current pivot weight. This process may be repeated iteratively, with the selected weight becoming the new pivot weight for the next iteration. The reordering process may continue until the weights are rearranged in a sequence or ordering that minimizes switching activity as much as possible within the limits of the heuristic approach.

Phrased differently, the algorithm begins by selecting an initial pivot weight and the iteratively appends the next weight with the smallest Hamming distance to the current pivot weight. The next weight becomes the pivot weight for the next iteration. The iterative process can continue until the entire sequence is reordered to minimize local bit transitions.

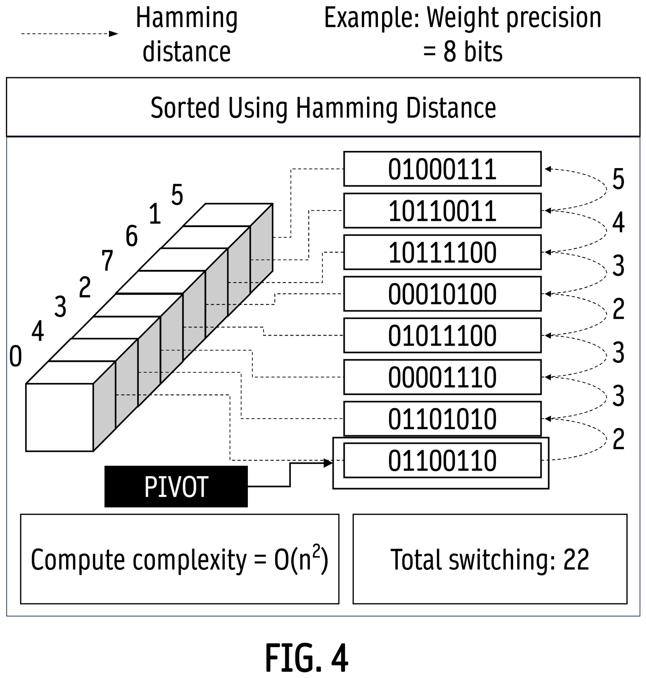

FIG. 4 illustrates reducing switching activity with weight reordering by applying the pivot-based greedy heuristic sorting algorithm, according to some embodiments of the disclosure. As depicted FIG. 4, this heuristic sorting algorithm may reduce the total switching activity to 22 bit transitions (e.g., total switching=22), which is significantly lower than the 32 transitions in the default sequence seen in FIG. 2. Although the total switching is not as low as the theoretical minimum (e.g., 19 transitions as seen in FIG. 3), the heuristic algorithm can achieve this reduction with a much more manageable computational complexity of *O*(*n*²), making it suitable for real-time and large-scale applications.

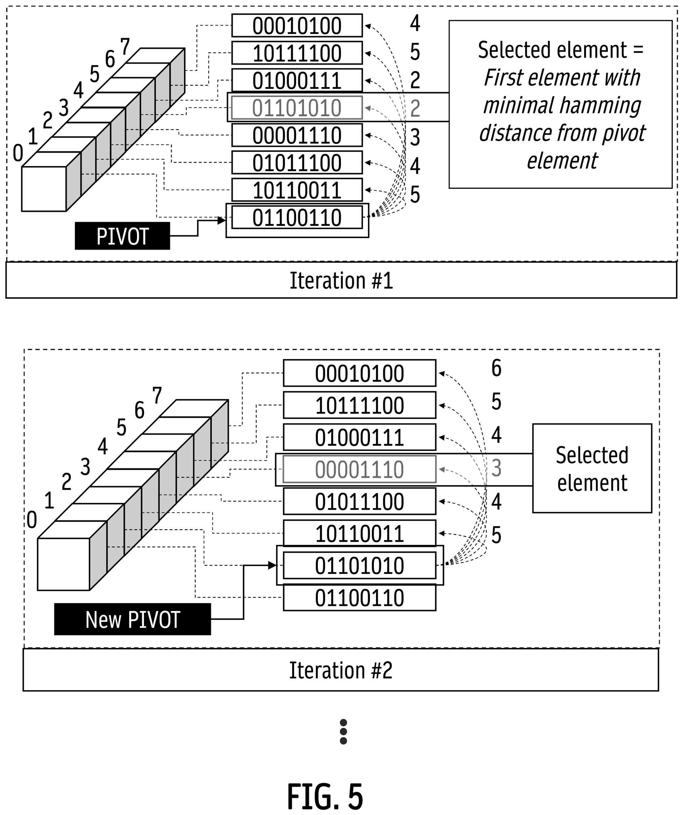

FIG. 5 illustrates the pivot-based greedy heuristic weight reordering algorithm, according to some embodiments of the disclosure. Specifically, FIG. 5 depicts a more detailed view of the sorting process. The first iteration (e.g., iteration #1) may start with an initial pivot, and the algorithm may select the weight with the smallest Hamming distance from the pivot element. After being selected (e.g., once being selected), this element may become the new pivot, and the process may repeat. In the second iteration (e.g., iteration #2), the algorithm may select the weight with the smallest Hamming distance from the new pivot. After being selected (e.g., once being selected), this element may become the new pivot, and the process may repeat. This iterative sorting process may progressively minimize the Hamming distance between consecutive weights, reducing the switching activity across the entire weight sequence. By selecting weights that minimize transitions at each step, the algorithm can ensure efficient weight reordering, leading to lower dynamic power consumption.

In some embodiments, the compiler determines the ordering of a plurality of weights by performing a number of iterations, where in an iteration, the compiler selects a weight in the plurality of weights to be a current pivot, select a next weight in the ordering of the plurality of weights having a minimum switching activity metric to the current pivot, and updates the current pivot to be the next weight.

### Integrating weight reordering into model compilation

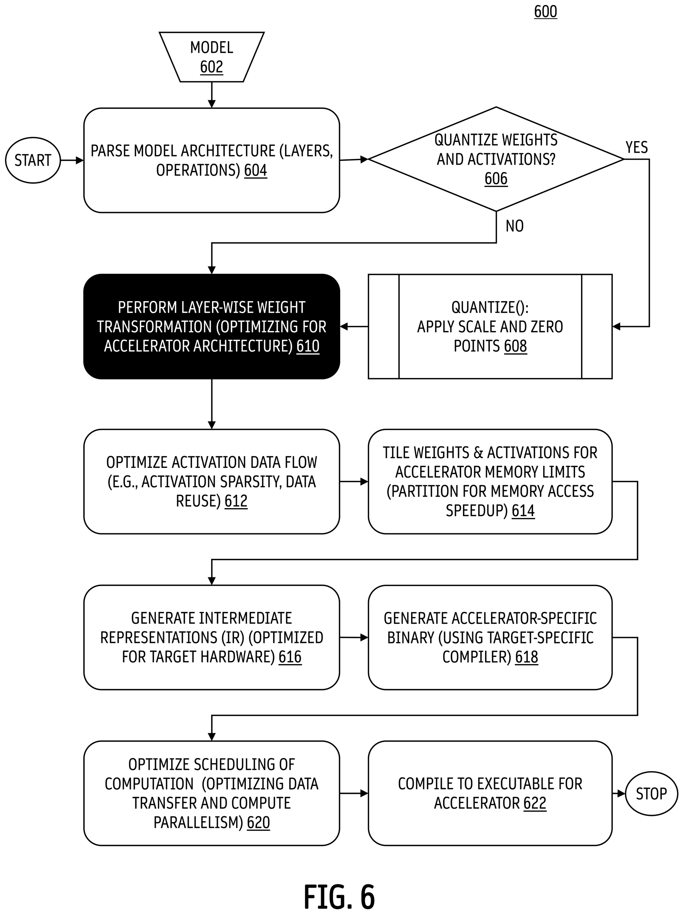

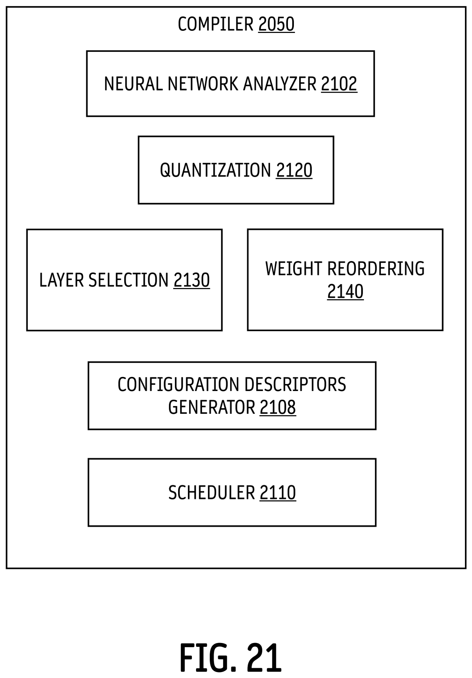

FIG. 6 illustrates model compilation process 600 having weight reordering to reduce switching power consumption, according to some embodiments of the disclosure. Model compilation process 600 integrates layer-wise weight transformation and optimization when compiling a neural network model, such as model 602. Model compilation process 600 outlines one or more operations being performed by a compiler for producing a compiled model to be deployed on a DNN accelerator. An exemplary compiler is described in FIG. 21, which can perform one or more operations of model compilation process 600. The compiler can optimize models, through weight reordering, to improve TOPS/W.

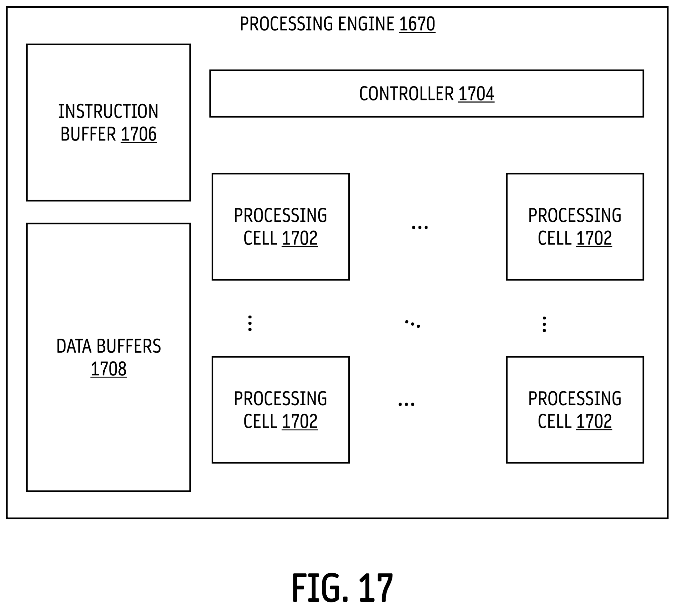

In some embodiments, model compilation process 600 begins with the compiler receiving receive a model definition of the neural network model 602. Model 602 may include a plurality of layers, e.g., neural network layers. The plurality of layers includes a layer having a plurality of weights to be applied onto a plurality of input activations using a processing element array of the neural network accelerator. The processing element array can be a MAC array, as illustrated in FIGS. 17-19.

In 604, the compiler may perform model parsing. Model parsing may include parsing the architecture of model602, such as identifying layers and neural network operations. Model parsing may include generating a processing graph having connected nodes representing neural network operations. Model parsing may include identifying the operation to be performed for a given node in the processing graph, and shapes of inputs and outputs of the operation for a given node in the processing graph. Model parsing may include forming the connections between the nodes and an order of processing. Model parsing allows the compiler to understand the structure and compute operations to be performed when executing model 602.

In 606, the compiler checks whether the weights and/or activations are to be quantized. If yes, model compilation process 600 may proceed via the "yes" path to 608. If no, model compilation process 600 may proceed via the "no" path to 610.

In 608, the compiler may perform quantization. Quantization (e.g., quantize()) may include applying scale and zero points to weights and activations to reduce the precision to improve memory and compute efficiency while minimizing accuracy loss. In some implementations, quantization is performed to produce quantized weights. After quantization, model compilation process 600 proceeds to 610. Quantization, such as low bit precision quantization, while widely used for model compression, memory reduction, and throughput improvements, can be used towards the goal of switching power reduction. Quantization can reduce value entropy and compress the weight dynamic range, which can be used in combination with weight reordering to address temporal patterns of weight transitions characterized by abrupt changes between discrete values and irregular toggling. Enabling quantization and performing weight reordering offers a tunable trade-off between energy efficiency and accuracy, with additional power savings beyond those achievable by weight reordering alone.

In 610, the compiler implements a layer-wise weight reordering or transformation to reduce switching activity for a particular DNN architecture. The weight reordering can be applied early in compilation process 600 to perform layer-wise weight transformation. By optimizing weight ordering based on the architecture, dynamic power efficiency and computational performance can be achieved for each layer. In some cases, the compiler further optimizes or transforms the weight through weight sparsity. The compiler can, for a particular layer among the plurality of layers of model 602, determine an ordering of the plurality of weights based on a switching activity metric, and determine a plurality of rearranged weights by arranging the plurality of weights according to the ordering. The compiler can select a layer among the plurality of layers of model 602 to perform the weight reordering.

In 612, the compiler can perform activation data flow optimization: The compiler optimizes the flow of activation data to leverage activation sparsity and data reuse, ensuring efficient data handling that minimizes memory access and enhances speed.

In 614, the compiler can perform weight and activation tiling. The compiler can tile weights and activations based on the accelerator's memory limits and allows partitioning for faster memory access and reduced data transfer times.

In 616, the compiler can generate intermediate representation (IR) optimized for the specific target hardware. In 618, the compiler can translate model 602 into a format suitable for low-level hardware instructions, such as machine-readable configurations. The compiler can generate one or more machine-readable configurations to configure the processing element array of the neural network hardware (e.g., the MAC array) to apply the plurality of rearranged weights onto the plurality of input activations. The compiler can generate one or more machine-readable configurations for the neural network accelerator to load the plurality of rearranged weights onto the processing element array according to the ordering and apply the plurality of rearranged weights onto the plurality of input activations.

In 620, the compiler can perform scheduling optimization. The compiler may optimize the scheduling of computation to balance data transfer and compute parallelism, ensuring that the hardware resources are efficiently utilized during execution.

In 622, the compiler can perform binary generation and compilation. The compiler produces an accelerator specific binary using a target-specific compiler and generates an executable that can run on the DNN accelerator, incorporating the optimizations made during the compilation process.

Model compilation process 600 can effectively transform the weights and optimize the model at a foundational level, allowing the DNN accelerator to handle sparse and dense computation dynamically. By leveraging this compiler support, weight reordering can enable significant improvements in power efficiency for DNN accelerators, including state-of-the-art DNN accelerators. More importantly, weight reordering by the compiler affects the arrangement of weights during compilation but would not alter the numerical values or impact the mathematical MAC operations. Thus, the accuracy of the DNN remains unaffected while the rearranged weights can lead to fewer bit transitions and reduced dynamic power consumption.

### Constraints on weight reordering within a layer and between layers

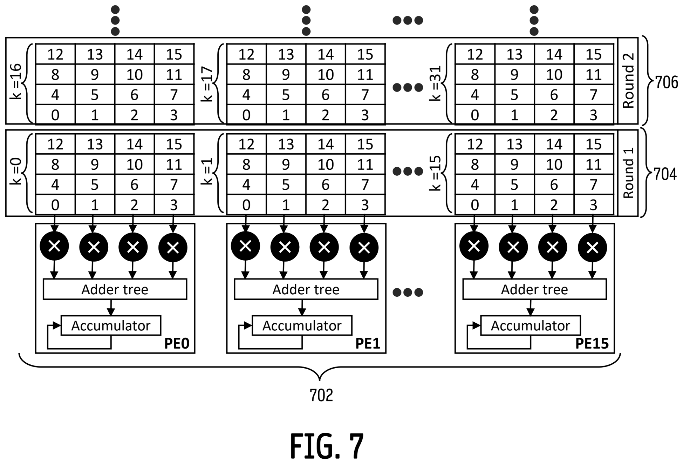

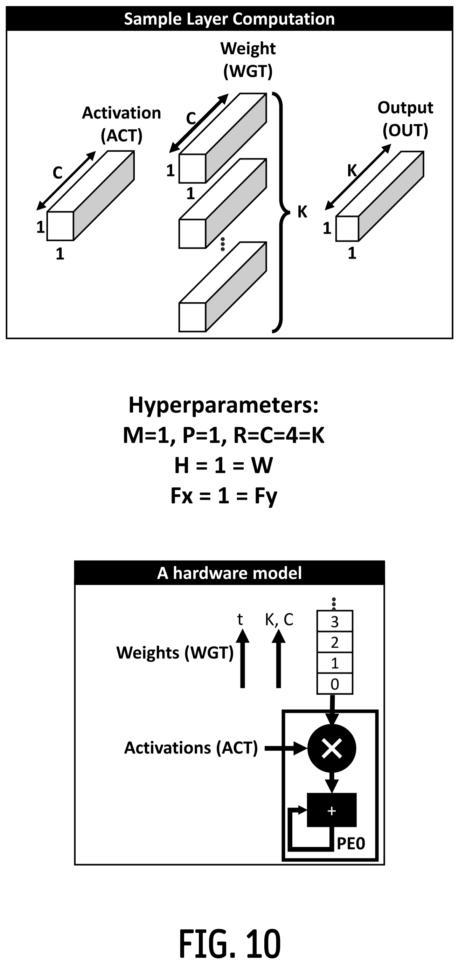

For some DNN accelerator implementations, there may be hardware limitations to how weight reordering can be applied. There may be intra-layer dependencies and inter-layer dependencies to consider. FIGS. 7-9 illustrate intra-layer dependencies. FIGS. 10-13 illustrate inter-layer dependencies.

In many currently available DNN accelerators, fixed dataflow architectures are designed to optimize throughput by enforcing predictable and synchronized data movement across MAC processing elements. However, this dataflow rigidity, governing how input activations and weights are fed to the MAC processing elements, can introduce significant limitations, particularly in terms of weight reordering to minimize switching activity, which affects dynamic power consumption.

The first limitation may be the inflexibility in the ordering of C values (channels or input channels) within a specific K (output channel) across different MAC processing elements of the MAC array within the same computation round. Each K represents a set of computations, and within each K, there are specific C values that need to be processed. During each round, these C values may be distributed across multiple MAC processing elements, and their order is fixed. Phrased differently, during each round of computation, weights from a fixed set of C values are distributed across the MAC processing elements in a predetermined order.

In an example in which the C values are arranged as [0, 1, 2, 3] and [4, 5, 6, 7] within K=0, this specific order is consistently maintained across the MAC processing elements during that round. The inability to dynamically alter the order of C values to minimize switching activity means that, even though rearranging the sequence of C values may reduce bit transitions and power consumption, the architecture does not allow such adjustments. For example, while the heuristic algorithm may identify a more optimal ordering to reduce switching activity, e.g., by reordering [4, 5, 6, 7] as [6, 4, 5, 7], the hardware data path does not allow for reordering and forces the original, fixed sequence to be used for the computations in the round. This rigidity forces the system to process weights in a predetermined order, potentially resulting in high switching activity due to larger Hamming distances between consecutive values.

The second limitation may be that the reordering established in a specific round is consistently maintained across the subsequent rounds. The second limitation enforces order uniformity across Ks and rounds. This means that after (e.g., once) the C values are arranged within a specific K during an initial round, that arrangement is replicated for the other Ks in the same round, and this order is preserved for future rounds. Once a particular C ordering is established in a round, e.g., [4, 5, 6, 7] in Round 2, that same sequence is repeated for the Ks processed in that round, as well as for future rounds of computation. This design guideline ensures simplified control and consistent timing across the MAC processing elements and eliminates the possibility of adapting the ordering dynamically based on switching cost.

For example, when the C values in K=0 are ordered as [4, 5, 6, 7] during the first round, the same order needs to be used for K=1, K=2, and so forth, across the MAC processing elements. This arrangement remains unchanged in subsequent rounds of computation. This strict requirement can ensure synchronization and predictability across the MAC processing elements, reduces rearrangement overhead, but can severely limit the ability to adapt the dataflow to reduce switching activity. Even when an alternative arrangement could minimize the bit transitions and save power, the system is locked into this fixed pattern, resulting in excessive switching and higher dynamic power consumption, especially during repeated loading and processing of weights.

FIG. 7 illustrates correct weight loading order over time, according to some embodiments of the disclosure. The correct weight loading order respects the limitations discussed above. The C ordering is the same across MAC processing elements 702 during a given round, e.g., round 1 704 or round 2 706. The C ordering is maintained across round 1 704 and round 2 706. The fixed hardware-level dataflow into MAC processing elements 702, where weights and activations are fed into MAC processing elements 702 in a synchronized, repetitive pattern is designed for efficiency and predictability but prevents the hardware from adjusting the order of C values to accommodate more power-efficient configurations. These constraints and limitations stem from the need to maintain synchronization and uniformity across MAC processing elements 702, ensuring high throughput and efficient parallel processing. However, this rigid structure also introduces significant inefficiencies in power consumption because the architecture cannot adapt the dataflow dynamically to minimize switching.

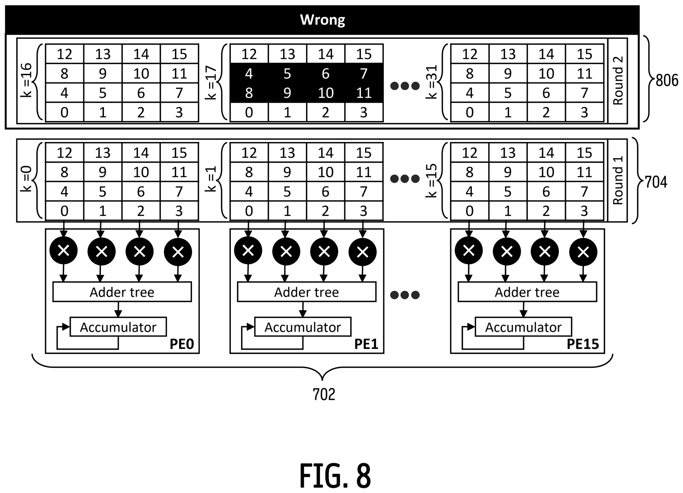

FIG. 8 illustrates incorrect weight loading order over time, according to some embodiments of the disclosure. The C ordering cannot change for a K within a round, as seen in round 2 806 for K=17. Changing the C ordering for a K within a round would cause incorrect calculations to be computed because the same set of input activations are streamed to MAC processing elements 702 in a fixed order and changing the ordering for a K within a round would lead to the input activations being multiplied with the wrong weights.

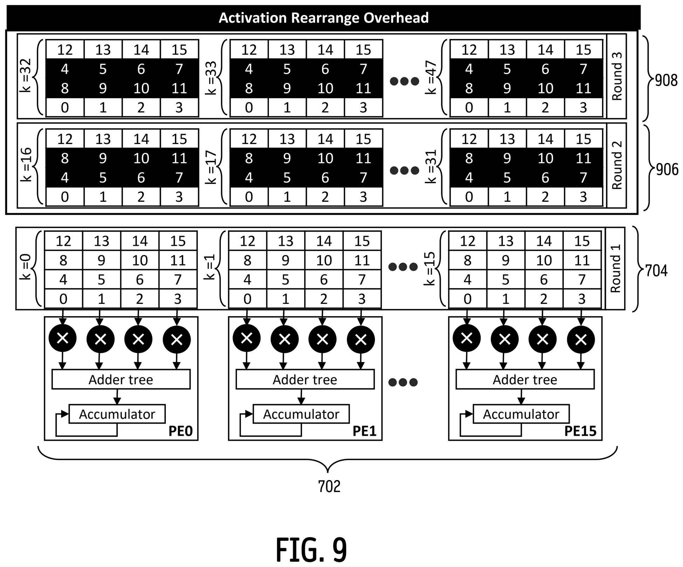

FIG. 9 illustrates maintaining weight ordering within each round but changing weight ordering in consecutive rounds, according to some embodiments of the disclosure. The C ordering is maintained for the Ks within a round, as seen in round 1 704, round 2 906, and round 3 908. Within a round, each MAC processing element of MAC processing elements 702 follows and processes a rigid order of C values within each K. While it is theoretically possible to change the C ordering between consecutive rounds, as seen in between round 2 906, and round 3 908, changing the C ordering can introduce overhead and risk breaking the synchronization and timing of weights and input activations being fed into MAC processing elements 702.

The limitations posed by existing hardware constraints can introduce inter-layer dependencies. Specifically, while weight reordering enables dynamic power reduction through weight reordering, applying weight reordering across multiple layers of a DNN model would need to consider how weights, activations, and output channels are interconnected in DNN data flows. In particular, inter-layer dependencies between the output channels (K) of layer i and the input channels (C) of layer i+1 introduce structural constraints, referred to herein as layer-wise reordering constraints, that impact where and how weight reordering can be applied in a DNN model. FIGS. 10-13 highlight the interdependence between input channel (IC) and output channel (OC) orders across layers.

FIG. 10 illustrates sample layer computation and a hardware model, according to some embodiments of the disclosure. In a convolutional layer, activations (ACT) are multiplied with weights (WGT) and produces outputs (OUT). ACT may be arranged along an input channel dimension (C). WGT can be arranged along an input channel dimension (C) and output channel dimension (K). OUT may be arranged along an output channel dimension (K). The output channels (K) of layer i is then consumed as the input channels (C) of layer i+1. Thus, any reordering of K in layer i is carried out through as the C ordering of layer i+1 to preserve functional correctness.

In FIG. 10, weights (WGT) interact with activations (ACT) to produce an output (OUT) in a particular layer. For illustration purposes, an exemplary hardware model is depicted where hyperparameters have specific values as shown, e.g., M=1, P=1, R=C=4=K, H=1=w, Fx=1=Fy. It is envisioned that other values for the hyperparameters may be used for the hardware model. When optimizing or reducing weight switching, dependencies between layers are considered.

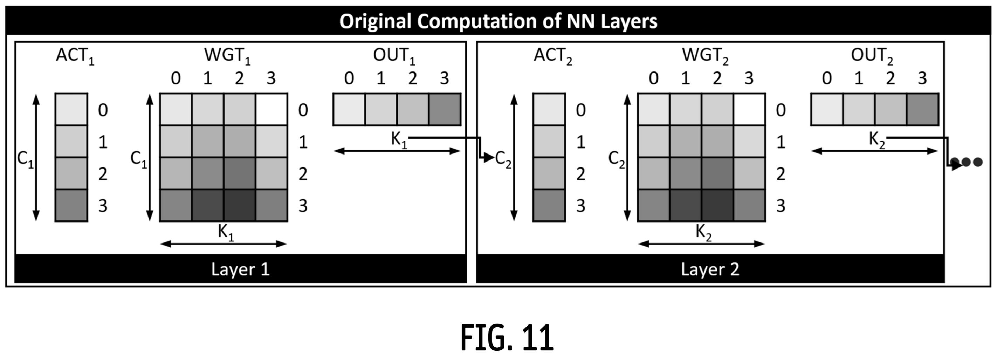

FIG. 11 illustrates unchanged computation performed in layer 1 and layer 2, according to some embodiments of the disclosure. In the illustration, neural network computations where activations (ACT) and weights (WGT) are sequentially processed in layers (e.g., layer 1 and layer 2) without any ordering modification. Each layer performs operations independently, and the output (OUT) of one layer directly serves as the input (ACT) for the next. In this configuration, activations and weights follow a fixed indexing order for each layer.

To apply weight reordering transformations, two options for reordering are considered.

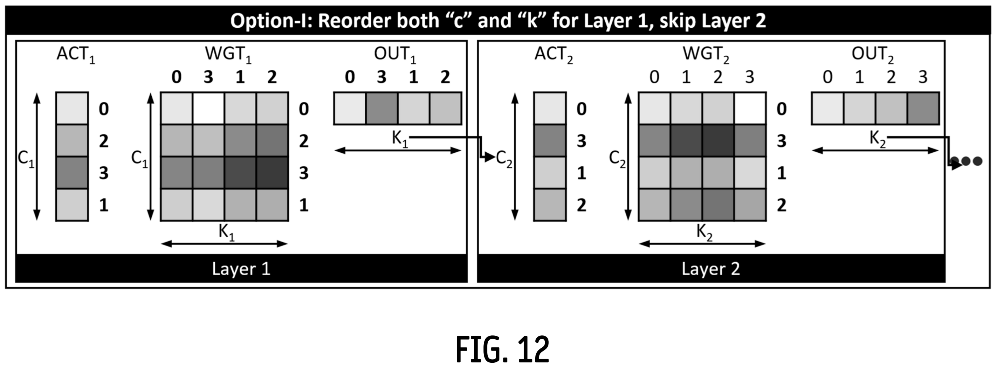

FIG. 12 illustrates reordering both input channel order and output channel order for layer 1 and leaving input channel order and output channel order unchanged for layer 2, according to some embodiments of the disclosure. Option I reorders both the "C" (IC) and "K" (OC) dimensions in layer 1 while keeping layer 2 unchanged. This reordering modifies the weights (WGT) and output (OUT) in layer 1, optimizing that layer but not propagating these optimizations to layer 2. In layer 1, the C ordering is changed for each K from 0123 to 0231, and the K ordering is changed from 0123 to 0312. The K ordering of layer 1 becomes the C ordering of layer 2, which means that the C ordering of layer 2 is dependent on layer 1. Due to the altered IC/OC or C/K order, reordering of K applied in layer 1 dictates layer 2 to adapt the C ordering to the K ordering of layer 1.

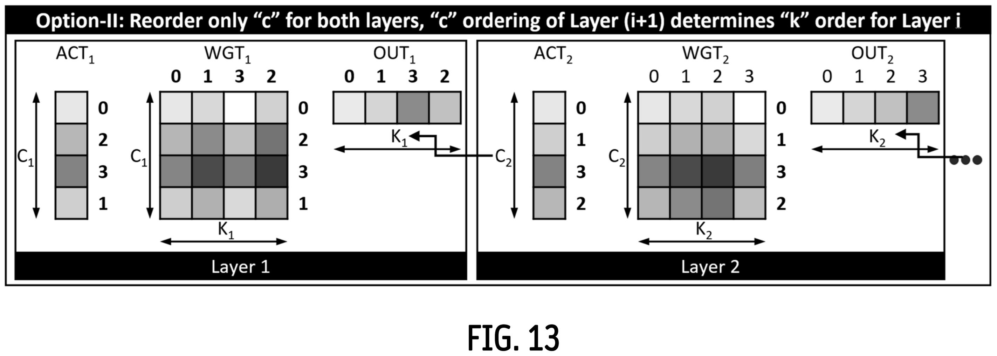

FIG. 13 illustrates reordering input channel order for layer 1 and reordering input channel order for layer 2, according to some embodiments of the disclosure. Option II attempts a partial optimization by reordering the "C" dimension for both layers, layer 1 and layer 2. The "K" dimension is reordered. Here, the IC ordering of layer 2 determines the "K" or OC order of layer 1, or more generally, the C ordering of layer i+1 determines the K ordering of layer i. This means that each layer's reordering affects the next, enforcing a dependency where the OC or K ordering of one layer aligns with the IC or C ordering of the subsequent layer.

Option I illustrated in FIG. 12, involving reordering the C ordering and K ordering for layer i and not applying reordering of C and K for layer i+1, can be implemented to minimize intra-layer switching activity. This reordering, e.g., applying C₁ and K₁ orderings in layer 1 is reflected in the output activations (OUT₁) of layer 1 in FIG. 12, which now follows a reordered K, e.g., K₁. These reordered outputs having K₁ ordering directly feed into layer 2 as its activations, having where K₁ ordering is applied as the C₂ ordering, without demanding additional reindexing hardware. Since layer 2 does not undergo any weight transformation, layer 2 simply inherits the K₁ ordering from layer 1 as its input C₂ ordering, maintaining correctness and alignment. This strategy of applying weight reordering a layer while leaving the next layer untouched can preserve inter-layer compatibility while still gaining the benefits of reduced switching activity in the transformed layer. The strategy avoids having to implement dynamic reordering hardware between layers and sidesteps activation reformatting overhead.

### Optimal layer selection algorithm

In some embodiments, Option 1 may be used for implementing weight reordering, as it can provide more degrees of freedom within a layer by allowing reordering of both C and K. This flexibility can enable better optimization opportunities for sparsity transformations and power efficiency at the layer level. Because each layer's K ordering determines the C order of the next, consecutive application of weight reordering across layers is not feasible under this option. Reordering both C and K in layer i, and then again in layer i+1, would lead to conflicting assumptions about activation ordering and break compatibility. Therefore, to maximize weight reordering power reduction potential while preserving layer-to-layer correctness, a skip-layer strategy can be adopted where weight reordering is applied to layers, but their immediate successors are left unmodified. Avoiding the hardware challenges associated with consecutive layers, the skip-layer strategy ensures that weight reordering is not applied to adjacent layers in the network.

To systematically determine which layers to apply weight reordering to, an analytical model may be developed. The analytical model may select layers based on their potential for optimization under the constraint that no two consecutive layers are selected for weight reordering. This model may strategically identify the layers where weight reordering can be beneficial overall (e.g., layers where weight reordering can be most beneficial or can achieve more power savings overall), balancing optimization with hardware feasibility.

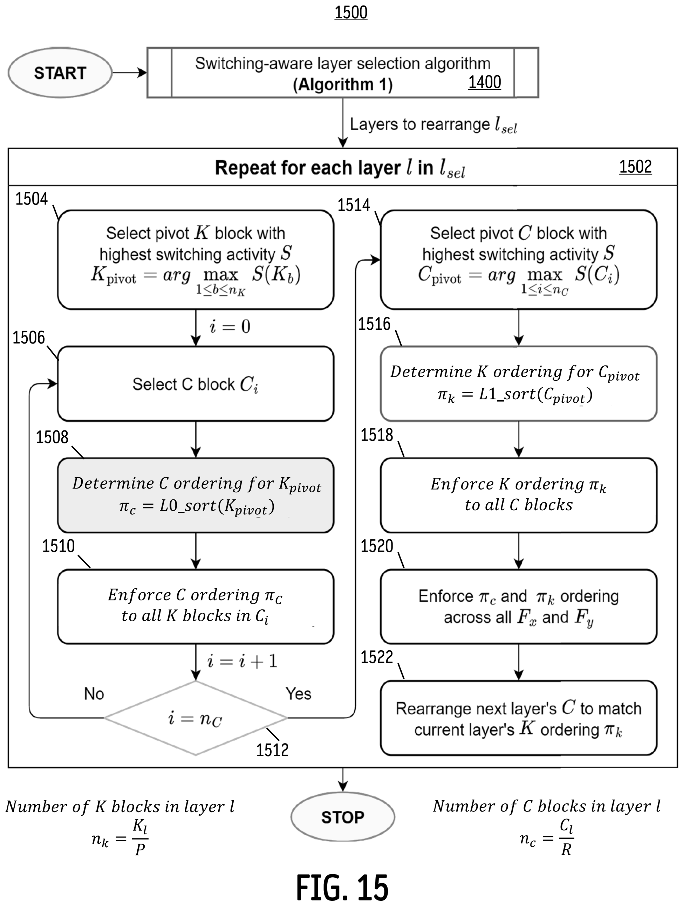

FIG. 15 depicts optimal layer selection algorithm 1400, according to some embodiments of the disclosure. To determine where weight reordering can be most effectively applied within a DNN model, the optimal layer selection algorithm 1400 can be implemented. Specifically, the optimal layer selection algorithm 1400 can analytically select layer(s) of the DNN model to apply weight reordering. Algorithm 1400 can identify the optimal subset of layers to apply weight reordering, subject to hardware constraints. Specifically, the algorithm 1400 ensures that no two adjacent layers are selected, preserving inter-layer compatibility as discussed earlier with FIG. 12.

In some embodiments, algorithm 1400 examines the analytical model to perform layer selection. Algorithm 1400 can identify the optimal layers in a DNN model for applying the weight reordering (e.g., reordering both K and C of a layer based on Hamming distances between pairs of weights), which aims to reduce switching activity during weight loading into a MAC array of DNN accelerator. Algorithm 1400 can consider one or more of the switching activity and the number of weights for each layer, selecting those layers where weight reordering will most effectively reduce overall power consumption for the model.

Algorithm 1400 takes as input the number of layers *L*, a switching activity score for each layer *S*[0 *... L -* 1] (based on bit transitions and weight reuse), and the number of weights per layer *nweight*[0 ... *L -* 1]. The switching activity score for each layer may be represented as an array of switching activity scores for each layer. A switching activity score may quantify a number of bit transitions or a number of bit flips of a given layer as sets of weights are loaded onto the circuitry of the neural network accelerator. The number of weights for each layer may be represented as an array of number of weights for each layer. In some embodiments, the inputs further include a user-defined parameter (e.g., "choice") to influence the selection process. These inputs can be used to compute a per layer optimization metric *M*[0 ... *L* - 1], such as the product of switching activity and number of weights for the layer. The output of algorithm 1400 is *lₛₑₗ,* which is a list of selected layer indices.

In lines 1-2 of algorithm 1400, when the model has a single layer (L == 1), algorithm 1400 may directly return the index [0].

Line 3 and onwards handles models with more than one layer.

In lines 3-4 of algorithm 1400, the optimization metric for each layer is calculated. The optimization metric can be considered as a switching cost of a given layer. The optimization metric for layer i, M[i], can be calculated based on one or more of a switching activity score for each layer (e.g., *S*[*i*]) and a number of weights for each layer (e.g., *nweight*[*i*])*.* In line 4, algorithm 1400 computes the switching cost of a given layer based on a product of the switching activity score and the number of weights (e.g., *M*[*i*] ← *S*[*i*] × *nweight*[*i*]). The intuition is that both the switching activity score and the number of weights of the layer contributes to dynamic power consumption. In some embodiments, an additional weight, a user-defined parameter (e.g., "choice"), can be applied to modulate the optimization metric.

In line 5, algorithm 1400 may initialize two variables: *sum*₋₂ and *layers*₋₂*,* to store the sum of metrics up to two layers before the current layer and indices of selected layers up to two layers before the current layer, respectively. *sum*₋₁ and *layers*₋₁ are variables that store the sum of metrics up to the previous layer and indices of selected layers up to the previous layer, respectively. *sum* and *layers* are variables that store the sum of metrics up to the current layer and indices of selected layers up to the current layer, respectively.

Using these variables, algorithm 1400 determines whether including the current layer yields a higher cumulative benefit than excluding it, under the constraint that consecutive layers cannot be jointly selected. Algorithm 1400 implements a dynamic programming formulation where algorithm 1400 maintains two running solutions: one including layers up to i-2 using *sum*₋₂ and *layers*₋₂, and one including layers up to i-1 using *sum*₋₁ and *layers*₋₁*.*

In lines 6-9, for layer 1 and layer 2, algorithm 1400 compares the optimization metric of layer 1 and the optimization metric of layer 2 (e.g., *M*[1] > *M*[0]) and selects the layer having the higher optimization metric.

For each layer i greater than 2, algorithm 1400 compares the cumulative metric if the current layer is skipped (e.g., inheriting the solution up to i-1) versus if the current layer is included (e.g., adding the optimization metric of the current layer to the solution up to i-2). At each iteration, as seen in lines 11-16, algorithm 1400 updates the running best solution based on which solution yields the greater total gain.

Once the final layer is processed, algorithm 1400 returns the indices of the selected, non-consecutive layers (*lₛₑₗ*) that maximize the aggregate switching reduction potential for the DNN model. This approach balances optimization opportunity with hardware feasibility, enabling weight reordering to be deployed where it is most impactful.

In some embodiments, algorithm 1400 selects a subset of layers in the plurality of layers based on one or more of a switching activity score for each layer (e.g., *S*[0 *... L* - 1]) and a number of weights for each layer (e.g., *nweight*[0 *... L -* 1]). The switching activity score may quantify a number of bit transitions or a number of bit flips of a given layer when the weights are, e.g., loaded onto the processing element array. The switching cost of a given layer may be based on one or more of a switching activity score for each layer (e.g., *S*[0 *... L* - 1]) and a number of weights for each layer (e.g., *nweight*[0 *... L* - 1]), e.g., a product of the switching activity score and the number of weights.

In some embodiments, algorithm 1400 selects a subset of layers in the plurality of layers under a constraint that only non-consecutive layers are selected. Algorithm 1400 can select the subset of layers under the constraint and performs the selection based on, e.g., a switching cost for each layer (e.g., *M*[0 *... L* - 1]).

In some embodiments, algorithm 1400 selects a subset of layers in the plurality of layers by iteratively comparing a cumulative switching cost if a current layer is skipped (e.g., *sum*₋₁) and a further cumulative switching cost if the current layer is selected (e.g., *sum*₋₂ + *M*[*i*]). The cumulative switching cost *sum*₋₁ includes, e.g., a sum of, all switching costs calculated for selected, non-consecutive layers up to layer i-1. The cumulative switching cost, *sum*₋₁, can represent the maximum cumulative switching cost (e.g., total switching reduction potential) for the best solution that considers layers up to i-1 (i.e., not including current layer i). The further cumulative switching cost includes, e.g., a sum of, all switching costs calculated for selected, non-consecutive layers up to layer i-2 and the switching cost of the current layer i. The further cumulative switching cost, *sum*₋₂ + *M*[*i*]*,* can represent the maximum cumulative switching cost (e.g., total switching reduction potential) for the best solution that considers layers up to i-2 (i.e., not including layer i-1 and layer i-2) plus the switching cost of the current layer i. If *sum*₋₁ > *sum*₋₂ + *M*[*i*]*,* then the current layer is skipped. Otherwise, or if *sum*₋₁ ≤ *sum*₋₂ + *M*[*i*], then the current layer is selected. After the comparison, the cumulative switching cost and the further cumulative switching cost are updated accordingly.

### Optimal weight reordering within a selected layer

FIG. 16 depicts layer-wise weight reordering process 1500, according to some embodiments of the disclosure. Layer-wise weight reordering process 1500 illustrates an example of a structured method for reordering weights within a DNN model to reduce switching activity, specifically focusing on minimizing the Hamming distance between consecutive weight elements while respecting the inherent constraints of the DNN accelerator's dataflow. Layer-wise weight reordering process 1500 defines a systematic approach for applying weight reordering to reduce switching activity within DNN layers, while honoring hardware-imposed constraints.

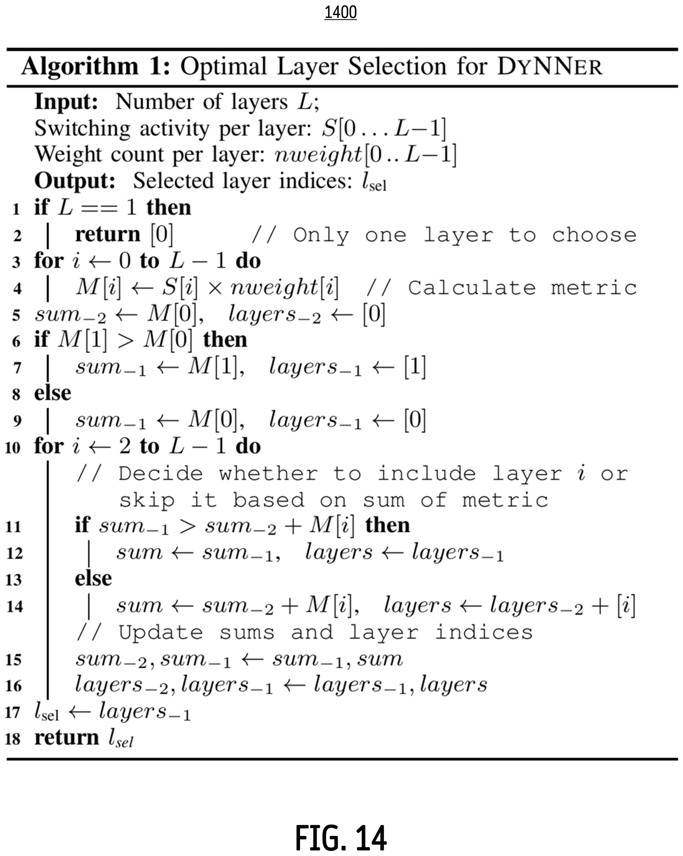

Layer-wise weight reordering process 1500 applies algorithm 1400 from FIG. 14 to produce selected layer(s), *lₛₑₗ*.

Operations in process 1502 are repeated for each layer *l* in *l*ₛₑₗ. In other words, layer-wise weight reordering process 1500 iterates through a preselected list of layers (*lₛₑᵣ*.) where weight reordering is to be applied. This list of layers may be derived based on the analytical model for optimal layer selection as previously discussed with FIG. 14, ensuring that no two consecutive layers are chosen.

For each selected layer, process 1502 performs L0 sorting, which is illustrated by operation 1508, and L1 sorting, which is illustrated by operation 1518.

L0 sorting can include the following operations. L0 sorting may start by selecting a pivot K (OC) block within the current layer, or *Kₚᵢᵥₒₜ*, targeting the K block that exhibits the highest switching activity. This pivot K block is then analyzed to determine the optimal C (IC) ordering, with the goal of reducing switching activity and aligning the sparsity pattern for that layer. The values of M, P, and C are coordinated in a lockstep manner, ensuring alignment between different parameters for efficient processing. The switching activity metricbased sorting mechanism is then applied to minimize the Hamming distance between rows within a K block (e.g., rows within a K block correspond to different ICs). By reducing Hamming distances, this operation can optimize switching efficiency and power consumption within the pivot K block. After (e.g., once) the C ordering for the pivot K block is established, L0 sorting enforces this determined C ordering across the K blocks within the layer, standardizing the C reordering pattern for the entire layer.

In operation 1504, a pivot output channel (K) block, *Kₚᵢᵥₒₜ,* is selected. The selected pivot K block may exhibit the highest switching activity *S*, which may be calculated based on prior profiling or metric estimation.

In operation 1506, a current C block is selected from the C blocks of the layer. The current C block may begin with the first input channel (C) block (e.g., *Cᵢ* where *i* = 0). Each C block of the layer can have R number of input channels.

In operation 1508, L0 sorting determines the optimal ordering of the C rows for pivot K block *Kₚᵢᵥₒₜ*. In other words, L0 sorting determines the optimal C ordering, e.g., *π_{c} = L*0*_sort*(*Kₚᵢᵥₒₜ*) by minimizing Hamming distances or other suitable switching activity metric, between adjacent rows of the weights of the pivot K block *Kₚᵢᵥₒₜ*. L0 sorting, minimizing Hamming distances between rows of *Kₚᵢᵥₒₜ* effectively reduces intra-K block switching caused by bit transitions among input channels (C) during MAC operations. The compiler determines the ordering of the plurality of weights, e.g., the C ordering for the pivot K block, that reduces switching activity between rows of the plurality of weights corresponding to a plurality of input channels of the layer.

Given that weights are typically structured in M×P groups with C values processed in lockstep, this optimal C ordering *π_{C}* is maintained across the architectural grouping. In operation 1510, the C ordering determined in operation 1508 is enforced across the K blocks in current C block (*Cᵢ*) to ensure a consistent pattern across the layer.

Operation 1508 and operation 1510 can be repeated individually for further C blocks of the layer. In 1512, the loop checks if the final C block has been reached, e.g., *i* = *n_{C}*, before allowing process 1502 to proceed to operation 1514. If the final C block has not been reached, process 1502 proceeds back to operation 1506. Each C block can have unique C ordering (determined in operation 1508 using on the pivot K block selected in operation 1504) leading to maximum switching reduction.

L1 sorting can include the following operations. L1 sorting can select a new pivot C (IC) block within the current layer, or *Cₚᵢᵥₒₜ*, targeting the C block with the highest switching activity. The pivot C block is then analyzed to determine the optimal K (OC) ordering for the pivot C block, with the goal of reducing or minimizing the Hamming distance between the last row of the current K block and the first row of the next K block, reducing the transitions needed as processing moves between blocks. After establishing the optimal K ordering for the pivot C block, the algorithm enforces this K ordering across the C blocks of the layer, ensuring consistency in the reordering pattern. To finalize the arrangement, the C and K ordering are enforced across Fx and Fy for the next layer, aligning the activations based on the reordered structure of the current layer.

In operation 1514, targeting inter-K block transitions, a pivot input channel (C) block *Cₚᵢᵥₒₜ* is selected. The selected pivot C block may exhibit highest observed switching activity S, which may be calculated based on prior profiling or metric estimation.

In operation 1516, L1 sorting determines the optimal K block ordering for the pivot C block *Cₚᵢᵥₒₜ.* In other words, L1 sorting determines the optimal K ordering, e.g., *πₖ* = *L*1_*sort*(*Cₚᵢᵥₒₜ*), by minimizing Hamming distances between the last row of one *K* block and the first row of the next *K* block. L1 sorting reduces switching activity of input channels C across consecutive K block accesses, i.e., inter-K block switching. The compiler can determine the ordering of the plurality of weights, e.g., the K ordering for the pivot C block, that reduces switching activity between a last row of rows of the plurality of weights (e.g., a last row of a K block) and a first row of further rows of a plurality of further weights of the layer (e.g., a last row of a further K block). The rows of a K block can correspond to a plurality of input channels of the layer. The further rows of the further K block can correspond to a plurality of further input channels of the layer.

In operation 1518, the identified or determined K ordering *πₖ* is enforced uniformly across the C blocks in the layer.

In operation 1520, the identified or determined C ordering *π_{c}* and the identified or determined K ordering *πₖ* are enforced across *Fₓ* and *F_{y}* of the weights of the layer.

In operation 1522, to preserve correctness across layers, the determine K ordering *πₖ* are then mapped onto the next layer's activation layout by aligning the input channel ordering (C ordering) of the next layer with the output channel ordering (K ordering) of the current layer. This preserves functional equivalence without introducing additional reordering hardware.

After performing process 1502, layer-wise weight reordering process 1500 repeats process 1502 for the next selected layer in *lₛₑₗ,* continuing until the rest of the designated layers in *lₛₑₗ* are processed. Process 1502 determines optimal weight ordering along the C dimension and the K dimension of the weights for selected non-consecutive layers. Process 1502 can efficiently select and rearrange layer parameters to reduce switching and power consumption without affecting adjacent layers, leveraging Hamming distance minimization techniques at both L0 and L1 levels to maximize the effectiveness of weight reordering within the constraints of existing hardware. This two-level sorting process enables weight reordering to minimize switching both within K blocks (via L0 sorting) and across K blocks (via L1 sorting), under real-world architectural constraints such as fixed channel groupings and inter-layer alignment. By enforcing uniformity within each layer and maintaining compatibility across layers, the algorithm achieves meaningful power savings without having to implement hardware modifications or accuracy trade-offs.

### Switching-aware architecture

Based on the guiding principles behind weight reordering to reduce switching activity, DNN accelerators can be made more efficient by adopting a different architecture framework. Specifically, the framework can enable power-efficient DNN accelerators by selecting configurations with higher M (e.g., number of MAC processing units per MAC processing element) and lower P (e.g., number of MAC processing elements in parallel in a MAC array). In such configurations, bit transitions can be minimized by processing weights within the same filter consecutively, resulting in inherently lower switching activity. This tailored approach can reduce dynamic power consumption based on user-specific area and power constraints. Additionally, the described weight reordering algorithm can be applied on top of these configurations, providing further switching reduction without any hardware modifications. This dual-layered strategy can ensure maximum power efficiency for machine learning applications in edge and client computing environments. The switching-aware architecture framework integrated with weight reordering can achieve dynamic power savings across various DNN models, with significant power reductions These results demonstrate the framework's effectiveness in reducing bit transitions and optimizing dynamic power efficiency, making it a versatile solution for DNN accelerators.

The insights derived from weight reordering optimization extend into hardware architectural design. While weight reordering operates at the software level to reduce switching activity by reordering weights within a fixed dataflow, it is further possible to optimize the underlying hardware configuration itself to influence switching behavior, even when total computational throughput remains unchanged. A switching-aware architecture design framework can help in selecting accelerator configurations (e.g., the M-P-R configuration) optimized for low bit-level transitions. In some spatial DNN accelerators, the number of MAC processing units is typically determined by three architectural parameters: M, P, and R in the M-P-R configuration. A designer may choose a combination of M, P, and R that preserves the overall compute budget. However, weight reordering effectiveness in reducing dynamic power consumption under different configurations reveals that the same total number of operations can lead to vastly different switching characteristics, depending on how data is spatially partitioned and accessed.

This difference arises because switching activity is closely tied to the locality and correlation of weights being processed by each MAC processing unit. In configurations where a MAC processing unit processes weights associated with a single filter (e.g., the same output channel K) across multiple input channels, the weights tend to exhibit natural correlation, they evolve smoothly, and their values are typically close in magnitude or sign. This spatial proximity in weight distribution results in smaller Hamming distances between consecutive values and, thus, reduced switching activity. In contrast, when MAC processing units are assigned to process weights from different filters (e.g., across multiple Ks) in quick succession, the likelihood of abrupt transitions between dissimilar values increases, leading to high bit toggling and consequently, increased dynamic power.

By strategically selecting M-P-R configurations that minimize switching activity, a more power-efficient architecture can be achieved without altering the total number of MAC operations. For instance, consider two configurations with different M and P values but an equal MAC count: M=1 and P=16 and M=16 and P=1, independent of the R value. In the 1-16 configuration, where one MAC unit processes 16 distinct ICs from 16 different K values, the switching activity is significantly higher. This occurs because each MAC unit is receiving weight values that are adjacent to each other in the IC dimension, and since these weights come from the same filter, they can vary widely in value. This high variation can lead to frequent bit transitions, resulting in increased switching power. In the first configuration, each MAC processing element processes weights from 16 different filters (K values) over a round of input channels. Since each weight originates from a different filter, there is no guarantee of continuity or smoothness between them. The result is a highly irregular switching profile with frequent large Hamming distances. On the other hand, in the 16-1 configuration, where 16 MAC units process ICs associated with the same K value in parallel, the switching activity is inherently lower. Here, each MAC unit processes weights associated with a single filter within the same K value in a given round, and then in the next round, it processes the next set of ICs from the following K value. Because the weights within a single filter tend to have more gradual value changes, this configuration can introduce fewer bit transitions, leading to reduced switching power. The lack of adjacency between drastically different weights contributes to this reduced switching, as each MAC unit is exposed to more similar weights in consecutive operations. In the second configuration, each MAC processing element processes multiple weights from the same filter over a round, which typically results in smoother transitions and lower cumulative switching. Although the arithmetic throughput is identical in both cases, the second configuration demonstrates a more power-efficient switching profile due to better weight correlation.

This behavior can be further substantiated by structured pruning observations. This phenomenon mirrors principles seen in structured sparsity and pruning techniques, where pruning in larger groups (e.g., 4:8) preserves functional characteristics better than more granular (1:2) schemes. In structured pruning, a 1:2 or 2:4 pruning pattern (where a small subset of weights is removed) tends to have a more detrimental impact on accuracy compared to larger pruning ratios like 4:8. This is because larger pruning windows provide a more global view, allowing the identification of weights that are likely to be redundant or less important, without heavily impacting the model's performance. The reason lies in that wider grouping captures more global context, enabling better retention of structure and correlation.

The switching-aware hardware architecture framework follows this guiding principle: by selecting M-P-R configurations that favor depth-wise reuse (high M) and reduce inter-filter weight shuffling (low P), the accelerator can naturally align computation with filter-locality, thereby minimizing unnecessary switching activity. In the M=16 and P=1 configuration, a broader view of ICs within the same K value can reduce abrupt weight variations, allowing for a smoother dataflow with fewer bit transitions and more efficient power consumption. This fundamental reasoning illustrates that by selecting configurations with fewer MAC processing elements in the MAC array (such as M=16 and P=1) over highly parallel configurations (like M=1 and P=16), the system can achieve a naturally lower switching activity profile. This configuration choice can leverage the weight adjacency and similarity within the same filter, creating an architecture with inherently lower switching power. This flexibility allows for a customized approach in architecture design where configurations are chosen based on their inherent switching behavior to meet target constraints on area and power consumption.

Another consideration is that not all switching activities are equally costly. In spatial accelerators, toggling at the MAC array level, especially across multiple rows or columns, triggers larger energy overheads than localized toggles within small functional units. Therefore, minimizing high-magnitude Hamming transitions across block boundaries (such as between successive rows of weights assigned to different MAC units or between output filters) would be beneficial. The switching-aware hardware architecture framework exploits this by favoring configurations where weight transitions remain within the same filter window as long as possible, reducing cross-block toggling and maintaining a more stable signal footprint. Ultimately, the switching-aware hardware architecture framework provides a principled method for incorporating power-awareness directly into the architectural design process. It enables designers to explore the M-P-R design space not just for performance or area efficiency, but for dynamic power minimization, leveraging the inherent structure of neural network weights and activation reuse. By embedding switching behavior into the cost model of architecture selection, the switching-aware framework bridges algorithm-hardware co-design, enabling more energy-aware DNN accelerators without sacrificing functional accuracy or architectural simplicity.

In designing DNN accelerators, switching activity can be a critical factor influencing power consumption and overall efficiency. The switching-aware architecture framework emphasizes that, even with an equal number of MAC units (as determined by M, P, and R values in the M-P-R configuration), different configurations can lead to significantly varying levels of switching activity. In some experiments, high variability of switching efficiency across different M-P-R configurations across different models (e.g., MobileNetV3-large, ResNet50, Inception-V3, and GoogleNet) is observed. The different M-P-R configurations, despite having the same number of MAC operations, exhibit distinct switching characteristics based on the distribution of M, P, and R. This variability in switching can be leveraged to tailor DNN accelerators according to user-specific requirements, balancing area constraints and power efficiency.

Weight reordering by the compiler can add an additional layer of optimization on top of this switching-aware architecture selection framework. After (e.g., once) an optimal configuration is selected based on switching characteristics, the weight reordering algorithm can be applied to further reduce switching activity. This reordering may be achieved without any additional area or energy overhead, making benefits effectively "free." The algorithm can rearrange weights to minimize bit transitions, complementing the inherent efficiency of the chosen configuration and maximizing power savings. The combination of selecting an inherently lowswitching M-P-R configuration using the switching-aware framework and applying weight reordering for further optimization results in a highly efficient DNN accelerator design, ideal for energy-sensitive applications in client and edge computing.

This switching-aware design framework, enhanced by weight reordering in the compiler, can provide a versatile toolset for achieving high performance and low power within constrained areas. It can enable developers to meet specific power and area targets for diverse AI applications, including imaging, video, and speech processing, by selecting configurations that naturally minimize switching and then leveraging weight reordering optimization to extract even more power savings. This dual-layered approach to reducing switching activity ensures that DNN accelerators can achieve optimal performance at minimal energy and area costs, reinforcing the value of weight reordering as a key enabler of efficient, scalable AI hardware solutions.

### Implementing DNNs on processors or neural network hardware accelerators

The significant improvements in DNN model size and accuracy coupled with the rapid increase in computing power of execution platforms have led to the adoption of DNN applications even within resourceconstrained mobile and edge devices that have limited power availability. DNN models may be executed, e.g., for training or inference, by DNN accelerators, or referred to herein as neural network hardware accelerators. A DNN accelerator may be or include one or more data processing units, or DPUs. A DPU may also be referred to as a compute block or compute tile. A DPU has highly specialized hardware circuitry to perform neural network operations. A DPU may include one or more processing engines that can carry out neural network operations or compute operations. A processing engine may include one or more processing cells to perform arithmetic operations associated with neural network operations, such as multiplication and multiply-and-accumulate. A DPU may include one or more PPEs that can carry out neural network operations such as scaling, adding a bias, and applying an activation function.

Herein and as understood by one skilled in the art, a tensor is a mathematical object that includes scalars, vectors, and matrices, and even data structures in higher dimensions. At its most basic level, a tensor can be a single number, known as a scalar. When extended to one dimension, a tensor can be vector, which is an array of numbers. Further extending to two dimensions, a tensor can be a matrix, which is a grid of numbers. Beyond these, tensors can exist in multiple dimensions, representing complex data structures that can be manipulated and transformed in various ways by a DNN accelerator. In the context of neural networks, tensors can be used to store multi-dimensional data. A neural network involves operations on tensors. Examples of operations may include addition, subtraction, multiplication, convolution, reshaping, transposition, slicing and indexing, broadcasting, etc. The operations manipulate and transform tensors to perform neural network tasks such as training and inference.

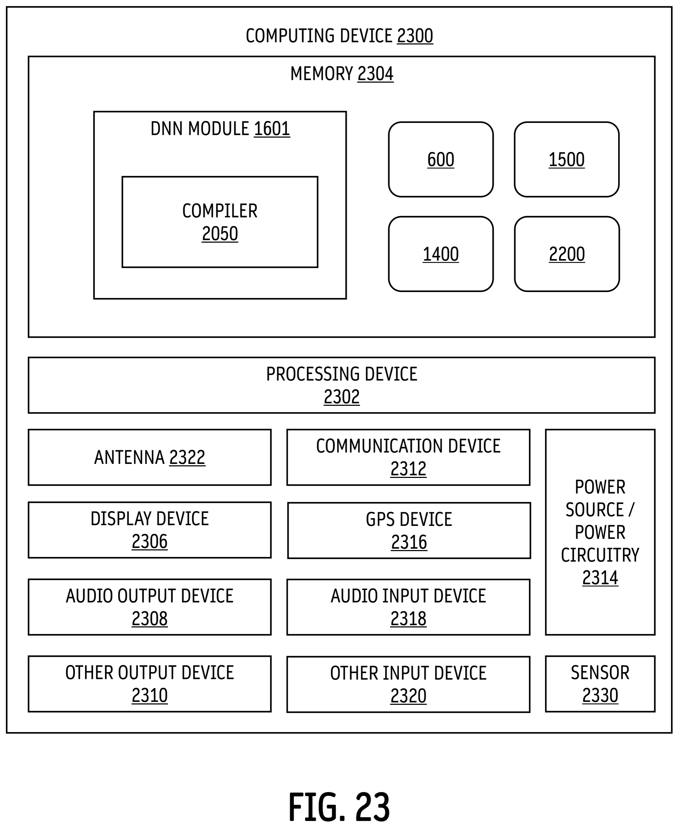

FIG. 16 illustrates DNN system 1600, according to some embodiments of the disclosure. The whole DNN system 1600 or a part of DNN system 1600 may be implemented in one or more computing devices, such as the computing device 2300 in FIG. 23. DNN system 1600 can generate and execute DNNs, such as transformer-based neural networks, CNNs, and so on. As shown in FIG. 16, DNN system 1600 includes DNN module 1601 and DNN accelerator 1602. In other embodiments, alternative configurations, different or additional components may be included in DNN system 1600. For instance, DNN system 1600 may include multiple DNN modules or multiple DNN accelerators. Further, functionality attributed to a component of DNN system 1600 may be accomplished by a different component included in DNN system 1600 or a different system. In some embodiments, DNN module 1601 and DNN accelerator 1602 may include or be implemented by different types of processing units. In an example, DNN module 1601 may be implemented by one or more central processing units (CPUs). DNN accelerator 1602 may also be referred to as a neural network hardware accelerator, a neural processing unit, AI accelerator, or AI processor. DNN module 1601 and DNN accelerator 1602 may be implemented in the same chip or as separate chips.

DNN module 1601 facilitates generation and deployment of DNNs. In some embodiments, DNN module 1601 may generate and train DNNs. For instance, DNN module 1601 can define the layered architecture of a DNN. DNN module 1601 can also determine the internal parameters of the DNN through a DNN training process. DNN module 1601 may also determine one or more hyperparameters that define how the DNN is trained. An example hyperparameter is a sparsity ratio that defines the sparsity level of one or more deep learning tensors for the DNN.

DNN module 1601 may compress DNNs, e.g., during or after training. In some embodiments, DNN module 1601 may prune weights in one or more layers of a DNN by changing non-zero-valued weight to zeros. DNN module 1601 may prune weights based on a target weight sparsity ratio. A weight sparsity ratio may be the ratio of the number of zero-valued weights to the total number of weights. In an example where the DNN module 1601 prunes weight during DNN training, the DNN module 1601 may prune weight of a layer to achieve a target sparsity ratio after one or more epochs. DNN module 1601 may prevent the pruned weights from changing values during the rest of the training process. Alternatively, DNN module 1601 may allow the pruned weights to change values so that a pruned, zero-valued weight may have a non-zero value after further training. DNN module 1601 may prune weights of the layer again after one or more additional epochs.

DNN module 1601 may deploy trained, compressed, or validated DNNs for use in deep learning applications. In some embodiments, DNN module 1601 may distribute trained, compressed, or validated DNNs to devices or systems which may use the DNNs to perform tasks (e.g., image classification, motion planning, etc.) for which the DNNs were trained. In other embodiments, DNN module 1601 may facilitate deployment of the DNNs using the DNN accelerator 1602. For instance, DNN module 1601 may receive data from a device or system coupled with DNN system 1600 and input the received data (or data generated by DNN module 1601, e.g., based on the received data) into a DNN. In some embodiments, DNN module 1601 may control execution processes of trained, compressed, or validated DNNs.

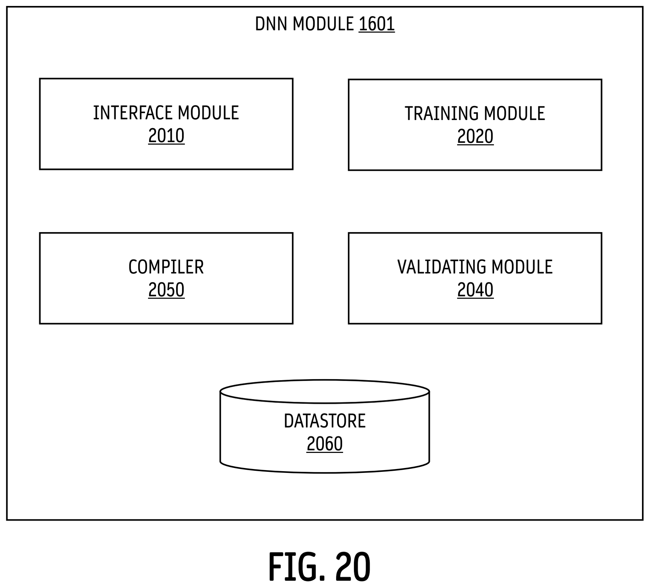

DNN module 1601 may compile instructions executable by DNN accelerator 1602 to perform operations of a DNN in accordance with a model definition of the DNN. DNN module 1601 may generate instructions (e.g., configuration descriptors, low-level machine instructions, etc.) that control the operation of the DNN accelerator 1602 during the DNN execution. The instructions may correspond to one or more data processing workloads sent from DNN module 1601 to DNN accelerator 1602, where the one or more data processing workloads are to be executed by DNN accelerator 1602. DNN module 1601 may function as a compiler for DNNs to be deployed onto and executed by DNN accelerator 1602. DNN module 1601 may perform compilation of DNNs and generate configuration descriptors and/or low-level machine instructions, based on which the DNNs may be executed. The instructions may be used to configure or control processing cells of processing engine 1670 to perform one or more deep neural network operations. The instructions may be used to configure or control post-processing engine 1680 to perform one or more operations such as applying an activation function. Certain aspects of the DNN module 1601 are described and illustrated in FIG. 20.

DNN module 1601 may receive an output of the DNN from the DNN accelerator 1602. DNN module 1601 may transmit the output of the DNN (or a result of processing the output of the DNN by DNN module 1601) to the device or system.

DNN accelerator 1602 executes operations of DNNs, based on instructions (configuration descriptors and/or low-level machine instructions) provided by DNN module 1601. For instance, DNN accelerator 1602 can execute a DNN by running deep learning operations in the DNN. The process of carrying out a deep learning operation is also referred to as a process of executing the deep learning operation or a process of performing the deep learning operation. The execution of the DNN may be for training the DNN or for using the DNN to perform AI and/or inference tasks.

As shown in FIG. 16, DNN accelerator 1602 includes memory 1610, direct memory access (DMA) engine 1620, and data processing units 1630 (individually referred to as "data processing unit 1630"). In other embodiments, alternative configurations, different or additional components may be included in DNN accelerator 1602. For example, DNN accelerator 1602 may include more than one memory 1610 or DMA engine 1620. As another example, DNN accelerator 1602 may include a single data processing unit 1630. Further, functionality attributed to a component of DNN accelerator 1602 may be accomplished by a different component included in DNN accelerator 1602 or by a different system. A component of DNN accelerator 1602 may be implemented in hardware, software, firmware, or some combination thereof.

Memory 1610 stores data associated with deep learning operations performed by DNN accelerator 1602. Example deep learning operations include convolutions (also referred to as "convolutional operations"), layer normalization operations, SoftMax operations, matrix multiplication operations, pooling operations, elementwise operations, activation functions, other types of deep learning operations, or some combination thereof.

In some embodiments, memory 1610 may store data to be used by the data processing units 1630 for DNN execution. memory 1610 may store weights, such as weights of convolutional layers, which are determined by training DNNs. Memory 1610 may further store inputs to DNN layers and/or outputs of DNN layers, such as data generated by the data processing units 1630 from performing deep learning operations in DNNs.

Memory 1610 may store instructions (e.g., configuration descriptors, low-level machine instructions, etc.) executable by DNN accelerator 1602, such as instructions executable by data processing unit 1630. Memory 1610 may be a main memory of DNN accelerator 1602. In some embodiments, memory 1610 includes one or more dynamic random-access memories (DRAMs). In some embodiments, cache 1612 may serve as a cache for memory 1610. Cache 1612 may include one or more SRAMs. Cache 1612 may offer faster data/memory accesses than memory 1610. Cache 1612 may store data that is frequently accessed. Capacity of cache 1612 is smaller than the capacity of memory 1610.

DMA engine 1620 facilitates data transfer between memory 1610 and local memories 1640 of the data processing units 1630. For example, DMA engine 1620 can read data from memory 1610 and write data into local memory 1640 of data processing unit 1630. As another example, DMA engine 1620 can read data from local memory 1640 of data processing unit 1630 and write data into memory 1610. DMA engine 1620 provides a DMA feature that allows data processing unit 1630 to initiate data transfer between memory 1610 and local memories 1640 of the data processing units 1630 and to perform other operations while the data transfer is being conducted. In some embodiments, DMA engine 1620 may read tensors from memory 1610, modify the tensors in a way that is optimized for data processing unit 1630 before it writes the tensors into local memories 1640 of data processing units 1630.

Data processing units 1630 perform deep learning operations in DNNs. For instance, data processing unit 1630 may execute a DNN layer by running one or more deep learning operations in the DNN layer. Data processing unit 1630 may execute a layer, or a portion of a layer, at a time. In some embodiments, the operations of the DNN layers may be run by multiple data processing units 1630 in parallel. For instance, multiple data processing units 1630 may each perform a data processing workload, or a portion of a data processing workload for a deep learning operation. Data may be shared between data processing units 1630. Data processing unit 1630 may also be referred to as a compute block, or a compute tile.

Data processing units 1630 may be capable of running various types of deep learning operations, such as convolution, layer normalization, SoftMax operation, pooling, elementwise operation, linear operation, nonlinear operation, matrix multiplication (MatMul), and so on. Deep learning operations performed by the data processing units 1630 include tensor operations, i.e., operations whose inputs are tensors or operations whose outputs are tensors. In an example, data processing unit 1630 receives an input tensor and one or more convolutional kernels and performs a convolution with the input tensor and convolutional kernels. The result of the convolution may be an output tensor, which can be further computed, e.g., by data processing unit 1630 or another data processing unit 1630.

In the embodiments of FIG. 16, each data processing unit 1630 includes local memory 1640, load module 1660, processing engine 1670, post-processing engine 1680, and output module 1690. Data processing unit 1630 may include a data processing pipeline that includes load module 1660, processing engine 1670, post-processing engine 1680, and output module 1690. Some or all the components of the data processing unit 1630 can be implemented on the same chip. In other embodiments, alternative configurations, different or additional components may be included in the data processing unit 1630. Further, functionality attributed to a component of data processing unit 1630 may be accomplished by a different component included in the data processing unit 1630, a different data processing unit 1630, another component of the DNN accelerator 1602, or a different system. A component of the data processing unit 1630 may be implemented in hardware, software, firmware, or some combination thereof.

Local memory 1640 is local to the corresponding data processing unit 1630. In the embodiments of FIG. 16, local memory 1640 is inside the data processing unit 1630. In other embodiments, local memory 1640 may be outside the data processing unit 1630. Local memory 1640 may include one or more SRAMs. The capacity of local memory 1640 (e.g., 1.5-2 Megabytes) may be far smaller than the capacity of memory 1610. Data in local memory 1640 may be transferred to or from memory 1610, or cache 1612, e.g., through DMA engine 1620. In some embodiments, data in local memory 1640 may be transferred to or from local memory 1640 of another data processing unit 1630. Local memory 1640 may store data received, used, or generated by load module 1660, processing engine 1670, post-processing engine 1680, or output module 1690. Examples of the data may include input activations, weights, output activations, low-level machine instructions, configuration descriptors, and so on.

In some embodiments, local memory 1640 may store tensors to be processed by the processing engine 1670 or the post-processing engine 1680. The tensors may be input tensors of deep learning operations. Local memory 1640 may also store tensors generated by processing engine 1670 or post-processing engine 1680. The tensors may be output tensors of deep learning operations. The layout of data points of a tensor in local memory 1640 may depend on the format in which the tensor is stored. In some embodiments, local memory 1640 may store tensors in various formats, including Z-major format, X-major format, and Y-major format. For a tensor with Z-major format, the local memory 1640 may store data points having the same (x, y) coordinate contiguously. For instance, the data points having the same (x, y) coordinate may be stored at a sequence of memory addresses the local memory 1640. For a tensor with the ZXY format or ZYX format, local memory 1640 may store data points having the same (x, y) coordinate contiguously. For instance, the data points having the same (x, y) coordinate may be stored at a sequence of memory addresses in local memory 1640. For a tensor with X-major format, local memory 1640 may store data points having the same (y, z) coordinate contiguously. For a tensor with Y-major format, local memory 1640 may store data points having the same (x, z) coordinate contiguously.

In some embodiments, local memory 1640 may store dense tensors (e.g., dense activation tensors, dense weight tensors, etc.), sparse tensors (e.g., sparse activation tensors, sparse weight tensors, etc.), and so on. A dense tensor may be a tensor from which zero-valued elements (if any) are not removed. A dense tensor may be converted to a sparse tensor by removing one or more zero-valued elements in the dense tensor. A sparse tensor may also be referred to as a compressed tensor or packed tensor. The process of converting a dense tensor to a sparse tensor may be referred to as sparsity encoding. Sparsity encoding may also generate a sparsity tensor. Each element in the sparsity tensor may correspond to a different element in the dense tensor and indicate whether the element in the dense tensor is zero or not. The sparsity tensor may indicate positions of elements of the sparse tensor in the dense tensor. The sparsity tensor may include a sparsity bitmap, each element of which is a bit. A sparse tensor may be converted to a dense tensor through a densifying process, in which one or more zeros may be added to the sparse tensor based on the sparsity tensor.

In some embodiments, local memory 1640 includes one or more SRAMs. Local memory 1640 may be byte-addressable, and each memory address identifies a single byte (eight bits) of storage. In some embodiments, local memory 1640 may include memory banks. The number of data banks in the local memory 1640 may be 16, 64, 128, 356, 512, 1624, 2048, or other numbers. A memory bank may include a plurality of storage units. In an example, a data bank may include 8, 16, 64, or a different number of storage units. A memory bank or a storage unit in a memory bank may have a memory address. In an example, a storage unit may store a single byte, and data larger than a single byte may be stored in storage units with consecutive memory addresses, i.e., adjacent storage units. For instance, a storage unit can store an integer number in the INT8 format, versus two storage units may be needed to store a number in the FP16 or BF16 format, which has 16 bits. In some embodiments, 16 bits can be transferred from local memory 1640 in a single read cycle. In other embodiments, 16 bits can be transferred from local memory 1640 in multiple read cycles, such as two cycles.

Load module 1660 loads data from local memory 1640 to the processing engine 1670 or to post-processing engine 1680. Load module 1660 may load data from local memory 1640 to one or more data buffers of the processing engine 1670. Load module 1660 may read tensors from the local memory 1640. The tensors may include sparse activation tensors, sparse weight tensors, activation sparsity tensors, weight sparsity tensors, and so on. In some embodiments, load module 1660 may load data based on a sparsity mode. Load module 1660 may select different data to transmit to the processing engine 1670 in different sparsity modes.

Processing engine 1670 performs neural network operations of DNNs. An exemplary processing engine 1670 is described and illustrated in FIG. 17.

Post-processing engine 1680 processes outputs of processing engine 1670. The post-processing engine 1680 may include one or more post-processing elements. In some embodiments, the post-processing elements in the post-processing engine 1680 may be arranged in an arrangement (e.g., in an array arrangement) that has rows and columns. In some embodiments, post-processing engine 1680 computes activation functions. Post-processing engine 1680 may receive outputs of processing engine 1670 as inputs to the activation functions. In addition or alternative to activation functions, post-processing engine 1680 may perform other types of post-processing on outputs of processing engine 1670. For instance, post-processing engine 1680 may apply a bias on an output of processing engine 1670. For instance, post-processing engine 1680 may perform scaling on an output of processing engine 1670. In some embodiments, post-processing engine 1680 may be bypassed for certain neural network operations.

Output module 1690 drains data from processing engine 1670 and/or from post-processing engine 1680. Output module 1690 may write the data to local memory 1640. The drained data may be tensors, such as output tensors of neural network operations. In some embodiments, output module 1690 may drain data on a cell level of processing engine 1670. For each processing cell, output module 1690 may drain outputs of processing elements in the processing cell based on a row index or column index of each processing element. For instance, output module 1690 may use a sequence of cycles to drain data from a processing cell. Output module 1690 may drain the output of some of the processing elements in each cycle. The sequence of the cycles may be configured based on a configuration parameter indicating the operation mode of load module 1660. The drained data, e.g., tensors, may be further loaded to memory 1610, e.g., through the DMA engine 1620. Additionally or alternatively, the drained data may be loaded by the load module 1660 to the processing engine 1670 for further computation, e.g., for performing a deep learning operation in the next layer.

FIG. 17 illustrates processing engine 1670, according to some embodiments of the disclosure. Processing engine 1670 may be included as part of a data processing unit, such as data processing unit 1630 of FIG. 16. Processing engine 1670 may include one or more processing cells 1702. In some embodiments, processing cells 1702 may be arranged in one or more rows and/or one or more columns in the processing engine 1670. In some embodiments, processing cells 1702 may be arranged as one or more sets or arrays of processing cells 1702 performing different operations. Processing engine 1670 may have one or more arrays of multiply-and-accumulate circuity (e.g., processing cells 1702) optimized to perform compute operations such as MatMul and convolution.

Each processing cell (e.g., processing cell 1702) may include one or more processing elements. In some cases, a processing cell includes a single processing element. In some cases, a processing cell includes a plurality of processing elements. The processing elements may be arranged as an array. The processing elements may be arranged in rows and/or columns. In some cases, a processing cell may include processing element(s) that perform the same operation. In some cases, a processing cell may include processing element(s) that perform different operations. In some cases, at least some of the processing element(s) in a processing cell may be arranged to perform operations in parallel. In some cases, at least some of the processing element(s) in a processing cell may be arranged to perform operations serially.

A processing element may perform an arithmetic operation associated with neural network operations or DNN operations. In some cases, the one or more processing elements that may be arranged in an array that includes rows and columns. Examples of processing elements may include a multiply unit, a division unit, a scaling unit, an adding unit, an accumulator unit a subtractor unit, a logarithmic unit, an exponentiation unit, a multiply-accumulate (MAC) unit, a bit shift unit, a square root unit, etc. The processing elements in processing cells may be arranged to perform an arithmetic operation on a vector of inputs to generate a vector of outputs (in parallel), sometimes referred to as vector processing. The processing elements in processing cells may perform scalar operations.

Processing engine 1670 may include controller 1704, which may configure circuitry of one or more processing cells 1702 to perform the arithmetic operations. In some cases, controller 1704 may configure one or more processing cells 1702 (or individual processing elements in a processing cell 1702) to perform operations in a particular sequence or manner. In some cases, controller 1704 may configure one or more processing cells 1702 (or individual processing elements in a processing cell 1702) according to instructions (e.g., configuration descriptors, and/or low-level machine instructions) loaded in instruction buffer 1706. Controller 1704 may include a program counter to determine the instructions loaded in instruction buffer 1706 to be executed by one or more processing cells 1702 (or individual processing elements in a processing cell 1702).

The instructions (e.g., configuration descriptors, and/or low-level machine instructions) loaded in instruction buffer 1706 may signal which processing cells 1702 (or individual processing elements in a processing cell 1702) is to execute or carry out one or more operations. Instruction buffer 1706 may include one or more register files, or one or more arrays of memory cells.

Data may be loaded in data buffers 1708 by controller 1704 and/or load module 1660 of FIG. 16. The data may be used by processing cells 1702. Data produced by processing cells 1702 may be drained from data buffers 1708 by output module 1690 to local memory 1640 of FIG. 16. Data buffers 1708 may include one or more register files, or one or more arrays of memory cells.

Data buffers 1708 may include one or more of: one or more input data buffers, and one or more output data buffers. Data buffers 1708 may include one or more weights/parameters buffers. Data buffers 1708 may store operands for one or more processing elements of processing cell 1702. Data buffers 1708 may store generated outputs of one or more processing elements of processing cell 1702.

The instructions (e.g., configuration descriptors, and/or low-level machine instructions) loaded in instruction buffer 1706 may signal which data stored in data buffers 1708 is to be processed by processing cells 1702 (or individual processing elements in a processing cell 1702). In some cases, the processing cells 1702 (or individual processing elements in a processing cell 1702) may read data from data buffers 1708 at a default location for the processing cell 1702 or an individual processing element in the processing cell 1702.

The instructions (e.g., configuration descriptors, and/or low-level machine instructions) loaded in instruction buffer 1706 may signal where to store output data in data buffers 1708 after processing cells 1702 produces the output data. In some cases, the processing cells 1702 (or individual processing elements in a processing cell 1702) may write data to data buffers 1708 at a default location for the processing cell 1702 or an individual processing element in the processing cell 1702.

Load module 1660 of FIG. 16 may load data to certain locations in data buffers 1708. Output module 1690 of FIG. 16 may drain data from data buffers 1708 to be stored in local memory 1640 and/or memory 1610 of FIG. 16.

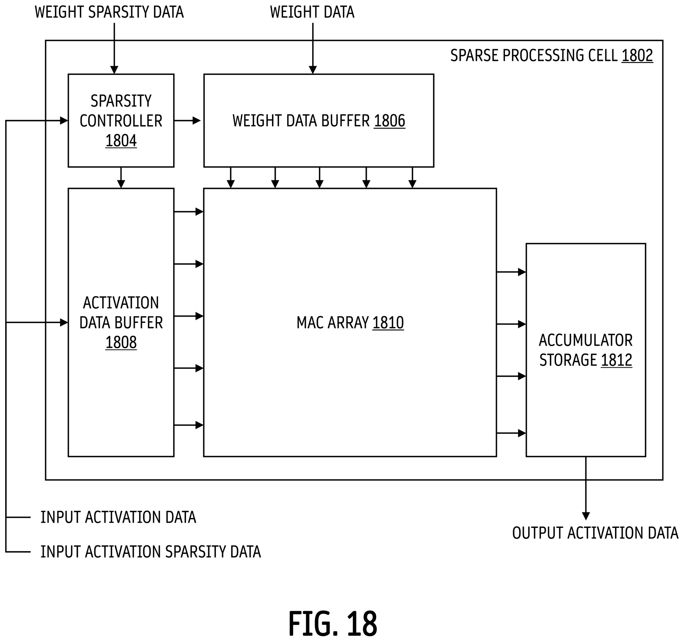

FIG. 18 illustrates sparse processing cell 1802 according to some embodiments of the disclosure. Sparse processing cell 1802 illustrates an exemplary implementation of processing cell 1702. In some embodiments, processing engine 1670 may include sparsity acceleration logic for facilitating and supporting sparsity acceleration. For instance, each processing cell 1702 in the processing engine 1670 may implement components of sparse processing cell 1802.

Sparse processing cell 1802 may include sparsity controller 1804, and MAC array 1810. Sparse processing cell 1802 may include weight data buffer 1806 to store weight data, and activation data buffer 1808 to store input activation data. Sparse processing cell 1802 may include accumulator storage 1812 to store accumulated data and produce output activation data. Sparsity controller 1804 may receive one or more of: weight sparsity data and input activation sparsity data.

In some embodiments, sparsity controller 1804 accelerates computations in MAC array 1810 based on sparsity in activations, sparsity in weights, or both to offer two-sided sparsity acceleration. Sparsity controller 1804 may include a storage unit that stores a sparsity tensor, which may be loaded to the storage unit by the load module 1660 of FIG. 16. The sparsity tensor may be an activation sparsity tensor, a weight sparsity tensor, or a combined sparsity tensor.

An activation sparsity tensor may be the sparsity tensor of an activation tensor and has the same number of elements as the activation tensor. An element in the activation sparsity tensor may indicate whether the corresponding element in the activation tensor is zero or not. For instance, a zero-valued in the activation sparsity tensor may indicate that the corresponding element in the activation tensor is zero. A one-valued in the activation sparsity tensor may indicate that the corresponding element in the activation tensor is non-zero.

A weight sparsity tensor may be the sparsity tensor of a weight tensor and has the same number of elements as the weight tensor. An element in the weight sparsity tensor may indicate whether the corresponding element in the weight tensor is zero or not. For instance, a zero-valued in the weight sparsity tensor may indicate that the corresponding element in the weight tensor is zero. A one-valued in the weight sparsity tensor may indicate that the corresponding element in the weight tensor is non-zero.

Sparsity controller 1804 may generate a combined sparsity tensor using an activation sparsity tensor and a weight sparsity tensor. For instance, sparsity controller 1804 may multiply an element of the activation sparsity tensor with a corresponding element of the weight sparsity tensor to compute an element of the combined sparsity tensor. The positions of the three elements in their corresponding sparsity tensors may match. In some embodiments, each element in a sparsity tensor may be a bit, and the sparsity tensor may be referred to as a sparsity bitmap.

Sparsity controller 1804 may use the sparsity tensor to identify activations and weights to be used in MAC operations by the MAC units. In an embodiment where processing engine 1670 operates in the combined sparsity mode, sparsity controller 1804 may identify activations and weights that correspond to non-zero-valued elements of a combined sparsity tensor. In an embodiment where processing engine 1670 operates in the activation sparsity mode, sparsity controller 1804 may identify activations and weights that correspond to non-zero-valued elements of an activation sparsity tensor. In an embodiment where MAC array 1810 operates in the weight sparsity mode sparsity controller 1804 may identify activations and weights that correspond to non-zero-valued elements of a weight sparsity tensor. The sparsity module may be bypassed in the dense mode as no sparsity acceleration would be conducted.

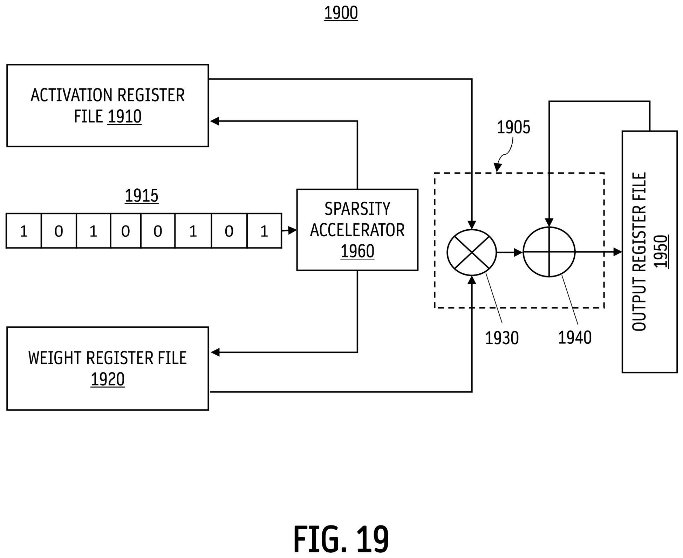

FIG. 19 illustrates sparse computation in sparse processing cell 1802, according to some embodiments of the disclosure. Sparse processing element 1900 may be a unit component of a processing cell, e.g., processing cell 1702 in the processing engine 1670, or sparse processing cell 1802 of FIG. 18. Phrased differently, a processing cell may have a grid or array of sparse processing elements, where an instance is shown as sparse processing element 1900.

In the embodiments of FIG. 19, sparse processing element 1900 includes an MAC unit 1905, activation register file 1910, weight register file 1920, output register file 1950, and sparsity accelerator 1960. MAC unit 1905 includes multiplier 1930 and adder 1940. In other embodiments, the sparse processing element 1900 may include fewer, more, or different components.

Activation register file 1910 stores an activation operand. Activation register file 1910 may be a part of activation data buffer 1808 of FIG. 18. Weight register file 1920 stores a weight operand. Weight register file 1920 may be a part of weight data buffer 1806. The activation operand and weight operand may be loaded from a memory (e.g., memory 1640 of FIG. 16) into activation register file 1910 and weight register file 1920, respectively.

Sparsity accelerator 1960 receives sparsity bitmap 1915 that corresponds to the sparse tensor in weight register file 1920. Sparsity bitmap 1915 may be generated by sparsity controller 1804 of FIG. 18. Sparsity bitmap 1915 may be a combined sparsity bitmap when MAC unit 1905 operates in a combined sparsity mode. Sparsity bitmap 1915 may be an activation sparsity bitmap when MAC unit 1905 operates in an activation sparsity mode. Sparsity bitmap 1915 may be a weight sparsity bitmap when MAC unit 1905 operates in a weight sparsity mode. Sparsity bitmap 1915 may have the same size (e.g., the same number of elements) as or a larger size than the activation operand or the weight operand.

Using sparsity bitmap 1915, sparsity accelerator 1960 selects, e.g., four activations from activation register file 1910 and selects four weights from weight register file 1920. Sparsity accelerator 1960 transmits the selected activations and weights to the multiplier 1930. These selected data elements correspond to the non-zero-valued elements of sparsity bitmap 1915. The four selected activations and the four selected weights may constitute four activation-weight pairs. Multiplier 1930 may compute a product based on each activation-weight pair and therefore, compute four products in total. The four products may be provided to adder 1940. Even though FIG. 19 shows a single multiplier 1930, MAC unit 1905 may include multiple multipliers that can perform multiple multiplication operations at the same time.

Adder 1940 accumulates the four products and computes a unit-level internal partial sum. The four unselected elements of the dense tensor are not processed to save power and time, which would not impact the value of the unit-level internal partial sum. For instance, when the dense tensor is a dense activation tensor, the weights corresponding to the unselected activations are zero so the products of the unselected activations and the weights would all be zero and have no contribution to the unit-level internal partial sum or other partial sums computed by the sparse cell. Similarly, when the dense tensor is a dense weight tensor, the activations corresponding to the unselected weights are zero so the products of the unselected weights and the activations would all be zero and have no contribution to the unit-level internal partial sum or other partial sums computed by the sparse cell. In other embodiments, MAC unit 1905 may operate in a dense mode in which sparsity bitmap 1915 is not used and sparsity accelerator 1960 is inactive. MAC unit 1905 may process all the activations in the activation operand and all the weights in the weight operand.

The unit-level internal partial sum may be stored in output register file 1950. In some embodiments, the unit-level internal partial sum may be used multiple times. For instance, the activation operand may represent N data blocks in the input tensor of the convolution, where N is an integer greater than 1. Instead of processing all the N data blocks to compute N unit-level internal partial sums, the unit-level internal partial sum is computed once and used N times in the convolutional layers as N unit-level internal partial sums.

In some embodiments, sparse processing element 1900 receives one or more processing element level internal partial sums from one or more other processing elements of the processing cell. Adder 1940 or an accumulator (not shown in FIG. 19) can accumulate the one or more processing element level internal partial sums with the processing element level internal partial sum of sparse processing element 1900 and store the result of the accumulation (i.e., a multi-processing-element internal partial sum) in output register file 1950. The one or more other processing elements in the processing cell having a MAC array may be in the same column as sparse processing element 1900 in a sparse processing cell. The multi-unit internal partial sum may be a column-level internal partial sum. In some embodiments, the processing element level internal partial sum of sparse processing element 1900 or the multi-unit internal partial sum may be sent to one or more other processing elements in the processing cell for further accumulation.

FIG. 20 illustrates DNN module 1601, according to some embodiments of the disclosure. DNN module 1601 includes interface module 2010, training module 2020, validating module 2040, compiler 2050, and datastore 2060. In other embodiments, alternative configurations, different or additional components may be included in the DNN module 1601. Further, functionality attributed to a component of DNN module 1601 may be accomplished by a different component included in DNN module 1601 or a different module or system.

Interface module 2010 facilitates communications of DNN module 1601 with other modules or systems. For example, interface module 2010 establishes communications between DNN module 1601 with an external datastore to receive data that can be used to train DNNs or input into DNNs to perform tasks. As another example, interface module 2010 supports DNN module 1601 to distribute DNNs to other systems, e.g., computing devices configured to apply DNNs to perform tasks.

Training module 2020 trains DNNs by using a training dataset. Training module 2020 forms the training dataset. In an example where training module 2020 trains an DNN to recognize objects in images, the training dataset includes training images and training labels. The training labels describe ground-truth classifications of objects in the training images. In some embodiments, each label in the training dataset corresponds to an object in a training image. In an example where training module 2020 trains a transformer-based neural network to predict the next token, the training data set may include a large library of sequences of tokens. In some embodiments, a part of the training dataset may be used to initially train the DNN, and the rest of the training dataset may be held back as a validation subset used by validating module 2040 to validate performance of a trained DNN. The portion of the training dataset not including the tuning subset and the validation subset may be used to train the DNN.

Training module 2020 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 5, 10, 50, 100, 500, 1600, or even larger.

Training module 2020 can define the architecture of the DNN, e.g., based on some of the hyperparameters. In some cases, training module 2020 may receive a model definition that defines or specifies the architecture of the DNN. The architecture of the DNN can include a plurality of layers. Examples of layers may include convolutional layers, pooling layers, fully connected layers, normalization layers, SoftMax or logit layers, and so on. After training module 2020 defines the architecture of the DNN, training module 2020 inputs a training dataset into the DNN. The training dataset includes a plurality of training samples. The training module 2020 modifies the parameters inside the DNN ("internal parameters of the DNN") to minimize the error between labels of the training objects that are generated by the DNN and the ground-truth labels of the objects. The internal parameters include weights used in layers of the DNN. In some embodiments, the training module 2020 uses a cost function to minimize the error.

Training module 2020 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After training module 2020 finishes the predetermined number of epochs, training module 2020 may stop updating the parameters in the DNN. The DNN having the updated parameters is referred to as a trained DNN.

Validating module 2040 verifies accuracy of trained DNNs. In some embodiments, validating module 2040 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, validating module 2040 may determine an accuracy score measuring the precision, recall, or a combination of precision and recall of the DNN. The validating module 2040 may use the following metrics to determine the accuracy score: Precision = TP / (TP + FP) and Recall = TP / (TP + FN), where precision may be how many the DNN correctly predicted (TP or true positives) out of the total it predicted (TP + FP or false positives), and recall may be how many the DNN correctly predicted (TP) out of the total number of objects that did have the property in question (TP + FN or false negatives). The F-score (F-score = 2 * PR / (P + R)) unifies precision and recall into a single measure.

Validating module 2040 may compare the accuracy score with a threshold score. In an example where validating module 2040 determines that the accuracy score of the DNN is less than the threshold score, validating module 2040 instructs training module 2020 to re-train the DNN. In one embodiment, training module 2020 may iteratively re-train the DNN until the occurrence of a stopping condition, such as the accuracy measurement indication that the DNN may be sufficiently accurate, or a number of training rounds having taken place.

Compiler 2050 compiles information associated with DNNs which can be used to cause or configure DNN accelerator 1602 of FIG. 16 to carry out neural network operations for DNNs. The information may include the model definition, one or more processing graphs, one or more data processing workloads produced from the one or more processing graphs, and executable instructions (e.g., workload descriptors, configuration descriptors, and/or low-level machine instructions) that can be executed by DNN accelerator 1602. The model definition may include one or more neural network operations to be performed by the DNN. In some embodiments, compiler 2050 may generate a processing graph representing a DNN. The graph may include nodes and edges. A node may represent a specific neural network operation in the DNN. An edge may connect two nodes and represent a connection between the two corresponding neural network operations. In an example, an edge may encode a tensor that flows from one of the neural network operations to the other neural network operation. The tensor may be an output tensor of the first neural network operation and an input tensor of the second neural network operation. The edge may encode one or more attributes of the tensor, such as size, shape, storage format, and so on.

Compiler 2050 may pre-process and/or modify the processing graph to identify opportunities to streamline the processing graph to reduce overhead of the compiled configuration descriptors. Due to the specific nature of the data processing pipeline in a DPU, compiler 2050 may follow a set of rules or patterns when producing one or more configuration descriptors for one or more nodes of the processing graph. Compiler 2050 may traverse through the processing graph to produce configuration descriptors according to the set of rules or patterns. The configuration descriptors can be used and executed by components of the DNN accelerator 1602 (e.g., processing engine 1670 and post-processing engine 1680 of FIG. 16) to execute the DNN.

Datastore 2060 stores data received, generated, used, or otherwise associated with the DNN module 1601. For example, datastore 2060 stores the datasets used by training module 2020 and validating module 2040. Datastore 2060 may also store data generated by training module 2020 and validating module 2040, such as the hyperparameters for training DNNs, internal parameters of trained DNNs (e.g., weights, etc.), data for sparsity acceleration (e.g., sparsity bitmap, etc.), and so on. Datastore 2060 may store configuration parameters, configuration descriptors, instructions generated by compiler 2050, etc. The datastore 2060 may include one or more memories. In the embodiment of FIG. 20, datastore 2060 is a component of DNN module 1601. In other embodiments, datastore 2060 may be external to DNN module 1601 and communicate with the DNN module 1601 through a network.

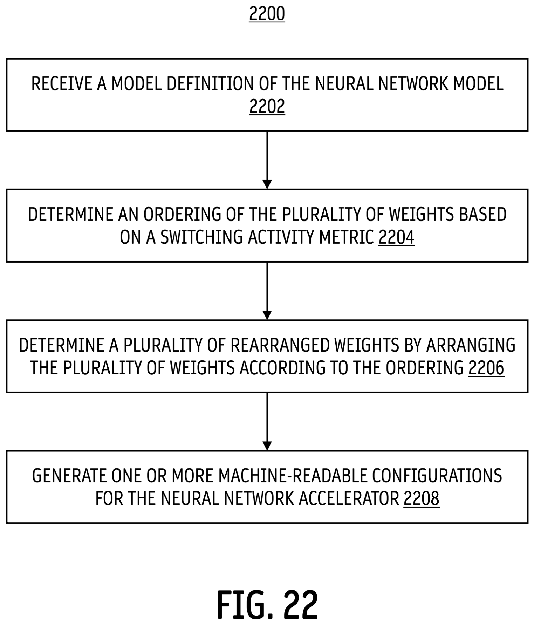

FIG. 21 illustrates compiler 2050, according to some embodiments of the disclosure. Compiler 2050 includes neural network analyzer 2102, quantization 2120, layer selection 2130, weight reordering 2140, configuration descriptors generator 2108, and scheduler 2110. Compiler 2050 may perform model compilation process 600 of FIG. 6. Compiler 2050 may perform algorithm 1400 of FIG. 14. Compiler 2050 may perform layer-wise weight reordering process 1500 of FIG. 15. Compiler 2050 may perform method 2200 of FIG. 22.

Neural network analyzer 2102 may analyze a DNN (e.g., a model definition) and determine how a neural network hardware accelerator can implement the DNN utilizing the components of the DNN accelerator. Neural network analyzer 2102 may receive the neural network model definition of the DNN. A neural network model definition may specify one or more layers of a neural network. For example, a neural network model definition may specify layers of the neural network and how the data should flow through the layers. A layer can be specified by the neural network operation that the layer performs. Examples of layers can include fully connected (linear) layer, convolutional layer, recurrent layer, long short-term memory network, gated recurrent unit layer, max pooling layer, average pooling layer, batch normalization layer, normalization layer, dropout layer, activation layer, embedding layer, etc. The layer can be specified by one or more of: input size, hidden size, output size, etc. The layer can be specified by one or more parameters of the neural network operation (e.g., for a convolutional layer, one or more parameters may include kernel size, padding, stride, etc.).

In some cases, neural network analyzer 2102 may determine a processing graph based on the neural network model definition. A processing graph may include connected nodes. The connected nodes can represent neural network operations to be executed by one or more data processing units or other components of the DNN accelerator and an order of execution of the neural network operations. The edges connecting the nodes can represent the flow of data between the neural network operations. Examples of neural network operations can include: a compute operation, convolution, filtering, pooling, arithmetic, matrix multiplication, applying an activation function (clamping function, exponential function, sigmoid function, power function, square root function, etc.), etc. An edge connecting a node and a further node that follows the node may represent that an output generated by the node is to be provided as an input to the further node. The processing graph may include one or more neural network operations to be executed by one or more DPUs (of the neural network hardware accelerator).

Neural network analyzer 2102 may determine one or more data processing workloads to be carried out by the DPUs (of the neural network hardware accelerator) based on the processing graph and/or the neural network model definition. The one or more data processing workloads may correspond to and/or include one or more neural network operations of the processing graph. For example, a data processing workload may include one or more neural network operations to be executed according to one or more configurations. The data processing workload may be executed by a data processing pipeline of a data processing unit, such as a processing engine of a data processing unit, or a post-processing engine of a data processing unit. In some cases, a neural network operation may translate to a data processing workload. In some cases, a neural network operation may translate to multiple data processing workloads. In some cases, one or more neural network operations may translate to one or more data processing workloads. The neural network operations can be executed by a data processing pipeline of a data processing unit, such as a processing engine of a data processing unit, or a post-processing engine of a data processing unit. The neural network operations can be executed by one or more data processing units or one or more parts of a data processing unit, according to the order of execution represented by the processing graph. A neural network operation of a data processing workload may be executed by a data processing unit according to one or more configurations for the neural network operation. In some cases, the neural network model definition includes the processing graph.

Neural network analyzer 2102 may perform 604 of FIG. 6.

Quantization 2120 may perform 608 of FIG. 6.

Layer selection 2130 may perform algorithm 1400 of FIG. 14 to determine selected layers.

Weight reordering 2140 may perform process 1502 of FIG. 15 for each selected layer.

Together, layer selection 2130 and weight reordering 2140 perform 610 of FIG. 6.

Configuration descriptors generator 2108 may generate one or more instructions (e.g., one or more configuration descriptors, one or more workload descriptors, low-level machine instructions, one or more machine-readable configurations, etc.) based on the data processing graph.

Scheduler 2110 may coordinate when and which DPUs should have the configuration descriptors generated by configuration descriptors generator 2108 loaded to execute the data processing workloads. The data processing workloads may be allocated by scheduler 2110 to the DPUs (in a neural network hardware accelerator), and scheduler 2110 may coordinate to have the corresponding configuration descriptors (or one or more parts of a configuration descriptor) provided to the DPUs. In some cases, scheduler 2110 may determine a plan that can load balance execution of the data processing workloads. Scheduler 2110 may determine a plan that ensures the data processing workloads are being executed according to the processing graph. Scheduler 2110 may determine a plan to cause a configuration descriptor or a portion of a configuration descriptor to be loaded onto a DPU at an appropriate time. In some cases, scheduler 2110 may be a part of compiler 2050. In some cases, scheduler 2110 may be a part of DNN module 1601 of FIGS. 16 and 21.

Together, configuration descriptors generator 2108 and scheduler 2110 may perform 616, 618, 620, and 622 of FIG. 6.

Referring back to FIGS. 16-21, DNN system 1600 illustrates one implementation of a processing system designed to accelerate execution of DNNs. The architecture design of a DNN accelerator 1602 can vary depending on the application requirements of the processor. The architecture design can vary based on the number of DPUs, the number of processing engines, the number of processing cells, the number of post-processing engines, structure of the data processing pipeline in a DPU, support for vector processing, support for sparsity modes, the types or collection of processing elements, amount of memory and buffer size, etc. The underlying hardware implementation of process can include other computing technologies, such as compute-in-memory technologies (including analog compute-in-memory technologies and digital compute-in-memory technologies).

### Exemplary methods for the compiler

FIG. 22 depicts a flow diagram illustrating method 2200 that can be carried out by a compiler, according to some embodiments of the disclosure. Method 2200 can be performed by a compiler, such as compiler 2050, to compile a neural network.

In 2202, the compiler receives a model definition of the neural network model comprising a plurality of layers. The plurality of layers have a layer having a plurality of weights to be applied onto a plurality of input activations, e.g., using a processing element array of the neural network accelerator.

In 2204, the compiler determines an ordering of the plurality of weights based on a switching activity metric.

In 2206, the compiler determines a plurality of rearranged weights by arranging the plurality of weights according to the ordering.

In 2208, the compiler generates one or more machine-readable configurations to configure the neural network accelerator to apply the plurality of rearranged weights onto the plurality of input activations. The compiler can generate one or more machine-readable configurations for the neural network accelerator to load the plurality of rearranged weights according to the ordering and apply the plurality of rearranged weights onto the plurality of input activations.

In some cases, the plurality of rearranged weights are loaded onto a processing element array of the neural network accelerator according to the ordering to reduce switching activity in the circuitry of the processing element array. In some embodiments, the processing element array is a MAC array.

### Exemplary computing device

FIG. 23 is a block diagram of an apparatus or a system, e.g., an exemplary computing device 2300, according to some embodiments of the disclosure. One or more computing devices 2300 may be used to implement the functionalities described with the FIGS. and herein. A number of components illustrated in FIG. 23 can be included in the computing device 2300, but any one or more of these components may be omitted or duplicated, as suitable for the application. In some embodiments, some or all of the components included in the computing device 2300 may be attached to one or more motherboards. In some embodiments, some or all of these components are fabricated onto a single System on a Chip (SoC) die. Additionally, in various embodiments, the computing device 2300 may not include one or more of the components illustrated in FIG. 23, and the computing device 2300 may include interface circuitry for coupling to the one or more components. For example, the computing device 2300 may not include a display device 2306, and may include display device interface circuitry (e.g., a connector and driver circuitry) to which a display device 2306 may be coupled. In another set of examples, the computing device 2300 may not include an audio input device 2318 or an audio output device 2308 and may include audio input or output device interface circuitry (e.g., connectors and supporting circuitry) to which an audio input device 2318 or audio output device 2308 may be coupled.

Computing device 2300 may include a processing device 2302 (e.g., one or more processing devices, one or more of the same types of processing device, one or more of different types of processing device). Processing device 2302 may include electronic circuitry that processes electronic data from data storage elements (e.g., registers, memory, resistors, capacitors, quantum bit cells) to transform that electronic data into other electronic data that may be stored in registers and/or memory. Examples of processing device 2302 may include a CPU, a GPU, a quantum processor, a machine learning processor, an AI processor, a neural network processor, an AI accelerator, an application specific integrated circuit (ASIC), an analog signal processor, an analog computer, a microprocessor, a digital signal processor, a field programmable gate array (FPGA), a tensor processing unit (TPU), a neural network hardware accelerator, a DNN accelerator (e.g., DNN accelerator 1602 as illustrated in FIGS. 16-19), NPU, etc.

Computing device 2300 may include a memory 2304, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 2304 includes one or more non-transitory computer-readable storage media. In some embodiments, memory 2304 may include memory that shares a die with the processing device 2302.

In some embodiments, memory 2304 includes one or more non-transitory computer-readable media storing instructions executable to perform operations described with the FIGS. and herein. Exemplary parts, e.g., DNN module 1601 and compiler 2050, that may be encoded as instructions and stored in memory 2304 are depicted. Memory 2304 may store instructions that encode one or more exemplary parts, such as DNN module 1601, one or more parts of DNN module 1601, compiler 2050, one or more parts of compiler 2050. The instructions stored in the one or more non-transitory computer-readable media may be executed by processing device 2302. Memory 2304 may store instructions that causes processing device 2302 to perform one or more methods, processes, or algorithms described and illustrated herein, such as model compilation process 600 of FIG. 6, algorithm 1400 of FIG. 14, layer-wise weight reordering process 1500 of FIG. 15, and method 2200 of FIG. 22.

In some embodiments, memory 2304 may store data, e.g., data structures, binary data, bits, metadata, files, blobs, etc., as described with the FIGS. and herein. Memory 2304 may store data associated with model compilation process 600 of FIG. 6, algorithm 1400 of FIG. 14, layer-wise weight reordering process 1500 of FIG. 15, and method 2200 of FIG. 22.

In some embodiments, memory 2304 may store one or more DNNs (and or parts thereof). Memory 2304 may store training data for training (trained) a DNN. Memory 2304 may store instructions that perform operations associated with training a DNN. Memory 2304 may store input data, output data, intermediate outputs, intermediate inputs of one or more DNNs. Memory 2304 may store one or more parameters used by the one or more DNNs. Memory 2304 may store information that encodes how nodes of the one or more DNNs are connected with each other. Memory 2304 may store instructions to perform one or more operations of the one or more DNNs. Memory 2304 may store a model definition that specifies one or more operations of a DNN. Memory 2304 may store instructions, such as configuration descriptors or the model blob, that are generated by a compiler based on the model definition.

In some embodiments, computing device 2300 may include a communication device 2312 (e.g., one or more communication devices). For example, the communication device 2312 may be configured for managing wired and/or wireless communications for the transfer of data to and from the computing device 2300. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 2312 may implement any of a number of wireless standards or protocols, including but not limited to Institute for Electrical and Electronic Engineers (IEEE) standards including Wi-Fi (IEEE 1702.10 family), IEEE 1702.16 standards (e.g., IEEE 1702.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 1702.16 compatible Broadband Wireless Access (BWA) networks are generally referred to as WiMAX networks, an acronym that stands for worldwide interoperability for microwave access, which is a certification mark for products that pass conformity and interoperability tests for the IEEE 1702.16 standards. Communication device 2312 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 2312 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). Communication device 2312 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. Communication device 2312 may operate in accordance with other wireless protocols in other embodiments. The computing device 2300 may include an antenna 2322 to facilitate wireless communications and/or to receive other wireless communications (such as radio frequency transmissions). Computing device 2300 may include receiver circuits and/or transmitter circuits. In some embodiments, Communication device 2312 may manage wired communications, such as electrical, optical, or any other suitable communication protocols (e.g., the Ethernet). As noted above, communication device 2312 may include multiple communication chips. For instance, a first communication device 2312 may be dedicated to shorter-range wireless communications such as Wi-Fi or Bluetooth, and a second communication device 2312 may be dedicated to longer-range wireless communications such as global positioning system (GPS), EDGE, GPRS, CDMA, WiMAX, LTE, EV-DO, or others. In some embodiments, a first communication device 2312 may be dedicated to wireless communications, and a second communication device 2312 may be dedicated to wired communications.

Computing device 2300 may include power source / power circuitry 2314. The power source / power circuitry 2314 may include one or more energy storage devices (e.g., batteries or capacitors) and/or circuitry for coupling components of the computing device 2300 to an energy source separate from the computing device 2300 (e.g., DC power, AC power, etc.).

Computing device 2300 may include a display device 2306 (or corresponding interface circuitry, as discussed above). The display device 2306 may include any visual indicators, such as a heads-up display, a computer monitor, a projector, a touchscreen display, a liquid crystal display (LCD), a light-emitting diode display, or a flat panel display, for example.

Computing device 2300 may include an audio output device 2308 (or corresponding interface circuitry, as discussed above). The audio output device 2308 may include any device that generates an audible indicator, such as speakers, headsets, or earbuds, for example.

Computing device 2300 may include an audio input device 2318 (or corresponding interface circuitry, as discussed above). The audio input device 2318 may include any device that generates a signal representative of a sound, such as microphones, microphone arrays, or digital instruments (e.g., instruments having a musical instrument digital interface (MIDI) output).

Computing device 2300 may include a GPS device 2316 (or corresponding interface circuitry, as discussed above). The GPS device 2316 may be in communication with a satellite-based system and may receive a location of the computing device 2300, as known in the art.

Computing device 2300 may include a sensor 2330 (or one or more sensors). Computing device 2300 may include corresponding interface circuitry, as discussed above). Sensor 2330 may sense physical phenomenon and translate the physical phenomenon into electrical signals that can be processed by, e.g., processing device 2302. Examples of sensor 2330 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

Computing device 2300 may include another output device 2310 (or corresponding interface circuitry, as discussed above). Examples of the other output device 2310 may include an audio codec, a video codec, a printer, a wired or wireless transmitter for providing information to other devices, haptic output device, gas output device, vibrational output device, lighting output device, home automation controller, or an additional storage device.

Computing device 2300 may include another input device 2320 (or corresponding interface circuitry, as discussed above). Examples of the other input device 2320 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

Computing device 2300 may have any desired form factor, such as a handheld or mobile computer system (e.g., a cell phone, a smart phone, a mobile internet device, a music player, a tablet computer, a laptop computer, a netbook computer, a personal digital assistant (PDA), a personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 2300 may be any other electronic device that processes data.

### Select examples

Example 1 provides an apparatus for compiling a neural network model to be executed on a neural network accelerator, including a processor; and a memory to store instructions, that when executed by the processor, cause the processor: receive a model definition of the neural network model including a plurality of layers, the plurality of layers including a layer having a plurality of weights to be applied onto a plurality of activations ; determine an ordering of the plurality of weights based on a switching activity metric; determine a plurality of rearranged weights by arranging the plurality of weights according to the ordering; and generate one or more machine-readable configurations for the neural network accelerator to load the plurality of rearranged weights according to the ordering and apply the plurality of rearranged weights onto the plurality of activations.

Example 2 provides the apparatus of example 1, where the neural network accelerator includes a processing element array to apply the plurality of weights onto the plurality of activations, and the processing element array is a multiply-and-accumulate array.

Example 3 provides the apparatus of example 1 or 2, where the switching activity metric between a pair of weights in the plurality of weights is a Hamming distance.

Example 4 provides the apparatus of any one of examples 1-3, where the instructions cause the processor to determine the ordering of the plurality of weights by: selecting a weight in the plurality of weights to be a current pivot; selecting a next weight in the ordering of the plurality of weights having a minimum switching activity metric to the current pivot; and updating the current pivot to be the next weight.

Example 5 provides the apparatus of any one of examples 1-4, where the instructions further cause the processor to: select a subset of layers in the plurality of layers based on one or more of a switching activity score for each layer and a number of weights for each layer, the switching activity score quantifying a number of bit transitions of a given layer.

Example 6 provides the apparatus of any one of examples 1-5, where the instructions further cause the processor to: select a subset of layers in the plurality of layers under a constraint that only non-consecutive layers are selected.

Example 7 provides the apparatus of any one of examples 1-6, where the instructions further cause the processor to: select a subset of layers in the plurality of layers by iterating through the plurality of layers and comparing a cumulative switching cost if a current layer is skipped and a further cumulative switching cost if the current layer is selected.

Example 8 provides the apparatus of any one of examples 1-7, where the instructions cause the processor to determine the ordering of the plurality of weights by: determining the ordering of the plurality of weights that reduces switching activity between rows of the plurality of weights corresponding to a plurality of input channels of the layer.

Example 9 provides the apparatus of any one of examples 1-8, where the instructions cause the processor to determine the ordering of the plurality of weights by: determining the ordering of the plurality of weights that reduces switching activity between a last row of rows of the plurality of weights and a first row of further rows of a plurality of further weights of the layer, the rows corresponding to a plurality of input channels of the layer, and the further rows corresponding to a plurality of further input channels of the layer.

Example 10 provides the apparatus of any one of examples 1-9, where the plurality of weights are quantized.

Example 11 provides one or more non-transitory computer-readable media storing instructions for compiling a neural network model to be executed on a neural network accelerator, that when executed by a processor, cause the processor to: receive a model definition of the neural network model including a plurality of layers, the plurality of layers including a layer having a plurality of weights to be applied onto a plurality of activations; determine an ordering of the plurality of weights based on a switching activity metric; determine a plurality of rearranged weights by arranging the plurality of weights according to the ordering; and generate one or more machine-readable configurations for the neural network accelerator to load the plurality of rearranged weights according to the ordering and apply the plurality of rearranged weights onto the plurality of activations.

Example 12 provides the one or more non-transitory computer-readable media of example 11, where the neural network accelerator includes a processing element array to apply the plurality of weights onto the plurality of activations, and the processing element array is a multiply-and-accumulate array.

Example 13 provides the one or more non-transitory computer-readable media of example 11 or 12, where the switching activity metric between a pair of weights in the plurality of weights is a Hamming distance.

Example 14 provides the one or more non-transitory computer-readable media of any one of examples 11-13, where the instructions cause the processor to determine the ordering of the plurality of weights by: selecting a weight in the plurality of weights to be a current pivot; selecting a next weight in the ordering of the plurality of weights having a minimum switching activity metric to the current pivot; and updating the current pivot to be the next weight.

Example 15 provides the one or more non-transitory computer-readable media of any one of examples 11-14, where the instructions further cause the processor to: select a subset of layers in the plurality of layers based on one or more of a switching activity score for each layer and a number of weights for each layer, the switching activity score quantifying a number of bit transitions of a given layer.

Example 16 provides the one or more non-transitory computer-readable media of any one of examples 11-15, where the instructions further cause the processor to: select a subset of layers in the plurality of layers under a constraint that only non-consecutive layers are selected.

Example 17 provides the one or more non-transitory computer-readable media of any one of examples 11-16, where the instructions further cause the processor to: select a subset of layers in the plurality of layers by iterating through the plurality of layers and comparing a cumulative switching cost if a current layer is skipped and a further cumulative switching cost if the current layer is selected.

Example 18 provides the one or more non-transitory computer-readable media of any one of examples 11-17, where the instructions cause the processor to determine the ordering of the plurality of weights by: determining the ordering of the plurality of weights that reduces switching activity between rows of the plurality of weights corresponding to a plurality of input channels of the layer.

Example 19 provides the one or more non-transitory computer-readable media of any one of examples 11-18, where the instructions cause the processor to determine the ordering of the plurality of weights by: determining the ordering of the plurality of weights that reduces switching activity between a last row of rows of the plurality of weights and a first row of further rows of a plurality of further weights of the layer, the rows corresponding to a plurality of input channels of the layer, and the further rows corresponding to a plurality of further input channels of the layer.

Example 20 provides the one or more non-transitory computer-readable media of any one of examples 11-19, where the plurality of weights are quantized.

Example 21 provides a method for compiling a neural network model to be executed on a neural network accelerator, including receiving a model definition of the neural network model including a plurality of layers, the plurality of layers including a layer having a plurality of weights to be applied onto a plurality of activations; determining an ordering of the plurality of weights based on a switching activity metric; determining a plurality of rearranged weights by arranging the plurality of weights according to the ordering; and generating one or more machine-readable configurations for the neural network accelerator to load the plurality of rearranged weights according to the ordering and apply the plurality of rearranged weights onto the plurality of activations.

Example 22 provides the method of example 21, where the neural network accelerator includes a processing element array to apply the plurality of weights onto the plurality of activations, and the processing element array is a multiply-and-accumulate array.

Example 23 provides the method of example 21 or 22, where the switching activity metric between a pair of weights in the plurality of weights is a Hamming distance.

Example 24 provides the method of any one of examples 21-23, where determining the ordering of the plurality of weights includes selecting a weight in the plurality of weights to be a current pivot; selecting a next weight in the ordering of the plurality of weights having a minimum switching activity metric to the current pivot; and updating the current pivot to be the next weight.

Example 25 provides the method of any one of examples 21-24, further including selecting a subset of layers in the plurality of layers based on one or more of a switching activity score for each layer and a number of weights for each layer, the switching activity score quantifying a number of bit transitions of a given layer.

Example 26 provides the method of any one of examples 21-25, further including selecting a subset of layers in the plurality of layers under a constraint that only non-consecutive layers are selected.

Example 27 provides the method of any one of examples 21-26, further including selecting a subset of layers in the plurality of layers by iterating through the plurality of layers and comparing a cumulative switching cost if a current layer is skipped and a further cumulative switching cost if the current layer is selected.

Example 28 provides the method of any one of examples 21-27, where determining the ordering of the plurality of weights includes determining the ordering of the plurality of weights that reduces switching activity between rows of the plurality of weights corresponding to a plurality of input channels of the layer.

Example 29 provides the method of any one of examples 21-28, where determining the ordering of the plurality of weights includes determining the ordering of the plurality of weights that reduces switching activity between a last row of rows of the plurality of weights and a first row of further rows of a plurality of further weights of the layer, the rows corresponding to a plurality of input channels of the layer, and the further rows corresponding to a plurality of further input channels of the layer.

Example 30 provides the method of any one of examples 21-29, where the plurality of weights are quantized.

Example 31 provides an apparatus including means for performing a method according to any one of examples 21-30.

Example 32 provides a computer program product including instructions which, when executed by a processor, cause the processor to perform a method according to any one of examples 21-30.

Example 33 provides machine-readable storage including machine-readable instructions, when executed, cause a computer to implement a method according to any one of examples 21-30.

Example 34 provides a computer program including instructions which, when the computer program is executed by a processing device, cause the processing device to carry out a method according to any one of examples 21-30.

Example 35 provides a computer-implemented system, including one or more processors, and one or more non-transitory computer-readable media storing instructions that, when executed by the one or more processors, cause the one or more processors to perform a method according to any one of examples 21-30.

### Variations and other notes

Although the operations of the example method shown in and described with reference to FIGS. are illustrated as occurring once each and in a particular order, it will be recognized that some operations may be performed in any suitable order and repeated as desired. Furthermore, the operations illustrated in FIGS. may be combined or may include more or fewer details than described.

The various implementations described herein may refer to AI, machine learning, and deep learning. Deep learning may be a subset of machine learning. Machine learning may be a subset of AI. In cases where a deep learning model is mentioned, if suitable for a particular application, a machine learning model may be used instead. In cases where a deep learning model is mentioned, if suitable for a particular application, a digital signal processing system may be used instead.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method for compiling a neural network model to be executed on a neural network accelerator, comprising:
receiving a model definition of the neural network model comprising a plurality of layers, the plurality of layers including a layer having a plurality of weights to be applied onto a plurality of activations;
determining an ordering of the plurality of weights based on a switching activity metric;
determining a plurality of rearranged weights by arranging the plurality of weights according to the ordering; and
generating one or more machine-readable configurations for the neural network accelerator to load the plurality of rearranged weights according to the ordering and apply the plurality of rearranged weights onto the plurality of activations.

2. The method of claim 1, wherein the neural network accelerator comprises a processing element array to apply the plurality of weights onto the plurality of activations, and the processing element array is a multiply-and-accumulate array.

3. The method of claim 1 or 2, wherein the switching activity metric between a pair of weights in the plurality of weights is a Hamming distance.

4. The method of any one of claims 1-3, wherein determining the ordering of the plurality of weights comprises:
selecting a weight in the plurality of weights to be a current pivot;
selecting a next weight in the ordering of the plurality of weights having a minimum switching activity metric to the current pivot; and
updating the current pivot to be the next weight.

5. The method of any one of claims 1-4, further comprising:
selecting a subset of layers in the plurality of layers based on one or more of a switching activity score for each layer and a number of weights for each layer, the switching activity score quantifying a number of bit transitions of a given layer.

6. The method of any one of claims 1-5, further comprising:
selecting a subset of layers in the plurality of layers under a constraint that only non-consecutive layers are selected.

7. The method of any one of claims 1-6, further comprising:
selecting a subset of layers in the plurality of layers by iterating through the plurality of layers and comparing a cumulative switching cost if a current layer is skipped and a further cumulative switching cost if the current layer is selected.

8. The method of any one of claims 1-7, wherein determining the ordering of the plurality of weights comprises:
determining the ordering of the plurality of weights that reduces switching activity between rows of the plurality of weights corresponding to a plurality of input channels of the layer.

9. The method of any one of claims 1-8, wherein determining the ordering of the plurality of weights comprises:
determining the ordering of the plurality of weights that reduces switching activity between a last row of rows of the plurality of weights and a first row of further rows of a plurality of further weights of the layer, the rows corresponding to a plurality of input channels of the layer, and the further rows corresponding to a plurality of further input channels of the layer.

10. The method of any one of claims 1-9, wherein the plurality of weights are quantized.

11. An apparatus comprising means for performing a method according to any one of claims 1-10.

12. A computer program product comprising instructions which, when executed by a processor, cause the processor to perform a method according to any one of claims 1-10.

13. Machine-readable storage including machine-readable instructions, when executed, cause a computer to implement a method according to any one of claims 1-10.

14. A computer program comprising instructions which, when the computer program is executed by a processing device, cause the processing device to carry out a method according to any one of claims 1-10.

15. A computer-implemented system, comprising one or more processors, and one or more non-transitory computer-readable media storing instructions that, when executed by the one or more processors, cause the one or more processors to perform a method according to any one of claims 1-10.
